# EUROPÄISCHE PATENTSCHRIFT

(11) **EP 3 082 430 B1**
(45) Veröffentlichungstag und Bekanntmachung des Hinweises auf die Patenterteilung: **14.02.2018**
(21) Anmeldenummer: 14821626.0
(22) Anmeldetag: 19.12.2014
(51) Int. Cl.: A01N 59/16, A01N 25/34, B05D 5/00

(54) **VERFAHREN ZUM HERSTELLEN EINES ANTIMIKROBIELL WIRKSAMEN MÖBEL- UND/ODER INNENAUSBAUTEILS**
METHOD FOR PRODUCING AN ANTIMICROBIAL FURNITURE PART AND/OR INTERIOR FITTING PART
PROCÉDÉ POUR PRODUIRE UN ÉLÉMENT DE MEUBLE ET/OU D'AMÉNAGEMENT INTÉRIEUR À EFFET ANTIMICROBIEN

(30) Priorität: 19.12.2013 DE 102013114573
(43) Veröffentlichungstag der Anmeldung: 26.10.2016
(73) Patentinhaber: Fritz Egger GmbH & Co. OG, 6380 St. Johann in Tirol (AT)
(72) Erfinder: GUGGENBICHLER, Josef-Peter, A-6345 Kössen (AT); SCHIEGL, Walter, A-6380 St. Johann / Tirol (AT)
(74) Vertreter: Cohausz & Florack
(86) Internationale Anmeldenummer: PCT/EP2014/078830
(87) Internationale Veröffentlichungsnummer: WO 2015/091998

(56) Entgegenhaltungen:
- EP-A2- 2 428 118
- WO-A1-2013/153124
- WO-A2-2007/079210
- WO-A2-2008/131985
- WO-A2-2008/136866

## Beschreibung

Die Erfindung betrifft ein Verfahren zum Herstellen eines antimikrobiell wirksamen Möbel- und/oder Innenausbauteils. Weiterhin betrifft die Erfindung ein antimikrobiell wirksames Möbel- und/oder Innenausbauteil sowie die Verwendung eines solchen Möbel- und/oder Innenausbauteils zur Herstellung eines Möbels und/oder einer Innenausstattung.

Ein antimikrobiell ausgestattetes Möbel- und/oder Innenausbauteil ist beispielsweise aus der EP 2 146 571 B1 bekannt und umfasst ein Substrat, welches mit einer Harzzusammensetzung imprägniert ist, die eine biozide Zusammensetzung enthält. Die biozide Zusammensetzung besteht aus einer organischen bioziden Verbindung, die beispielsweise aus der Gruppe der Isothiazolinone ausgewählt sein kann, und einem nanoskaligen Metalloxid wie beispielsweise ZnO, MgO oder Al₂O₃. Das Möbel- und/oder Innenausbauteil kann beispielsweise zur Herstellung von Laminaten für Arbeitsflächen für Küchen, Fußbodenbeläge, Türen, Nasszellen und dergleichen verwendet werden.

Das Dokument EP 2 428 118 A2 offenbart die Verwendung von Molybdän- und Wolfram-Verbindungen, die bei Kontakt mit Wasser zu Molybdän- bzw. Wolframsäure reagieren und daher eine pH-Wert Absenkung bewirken können.

Das Dokument WO 2013/153124 A1 befasst sich mit antimikrobiellen Verbundwerkstoffen und schlägt die Verwendung von Molybdän-Verbindungen und Hydrophilierungsmitteln zur Verbesserung der antimikrobiellen Wirksamkeit vor.

Das Dokument WO 2007/079210 A2 befasst sich mit dem Schutz von Holz und anderen Cellulose-haltigen Materialen durch Bekämpfung von Insekten, insbesondere von Termiten und Schiffsbohrwürmern. Hierzu werden lösliche Komplexen von Molybdaten oder Wolframaten mit Ammoniak oder Ethanolamin zur Schädlingsbekämpfung eingesetzt.

Das Dokument WO 2008/136866 A2 befasst sich mit der Gasphasenabscheidung von verschiedenen Metallverbindungen auf Oberflächen durch Lichtbogenverdampfung, um eine antimikrobielle Wirkung zu erzielen. Als mögliche Edukte werden dabei unter anderem MoO₃, WO₂, WO₃, MoSₓ sowie Carbosilizide von Molybdän und Wolfram genannt.

Das Dokument CN 101 891 252 A offenbart ein spezifisches Herstellungsverfahren für Zinkmolybdat.

Das Dokument CN 101 780 980 A offenbart die Herstellung von Ag₂MoO₄ und verwendet diese Verbindung zur Herstellung von Keramikmaterialien.

Das Dokument CN 101 268 784 A offenbart die gemeinsame Ausfällung von Ag₂MoO₄, ZnMoO₄ und CuMoO₄ und verwendet diese Mischung zur Herstellung von Sanitär-Keramik bei Sintertemperaturen von 1260 °C.

Als nachteilig an dem bekannten Möbel- und/oder Innenausbauteil ist jedoch der Umstand anzusehen, dass die verwendeten organischen Biozide mit der Zeit ausgewaschen und abgebaut werden, wodurch einerseits die antimikrobielle Wirksamkeit nachlässt und andererseits eine erhöhte Umweltbelastung auftritt. Weiterhin besteht bei organischen Bioziden grundsätzlich die Gefahr von Resistenzbildungen und Allergisierungen. Darüber hinaus zeigen die verwendeten anorganischen Verbindungen für sich genommen nur eine vergleichsweise geringe antimikrobielle Wirkung, die zudem stark von der Anwesenheit von Licht abhängig ist, da die genannten Verbindungen photoaktiviert werden müssen.

Aufgabe der vorliegenden Erfindung ist es, ein Verfahren zum Herstellen eines antimikrobiell wirksamen Möbel- und/oder Innenausbauteils anzugeben, welches eine länger anhaltende und breitere antimikrobielle Wirksamkeit besitzt, die nicht von der Anwesenheit von Licht abhängig ist. Weitere Aufgaben der Erfindung bestehen darin, ein entsprechendes antimikrobiell wirksames Möbel- und/oder Innenausbauteil sowie eine Verwendung eines solchen Möbel- und/oder Innenausbauteils anzugeben.

Die Aufgaben werden erfindungsgemäß durch ein Verfahren mit den Merkmalen des Anspruchs 1, ein antimikrobiell wirksames Möbel- und/oder Innenausbauteil mit den Merkmalen des Anspruchs 22 sowie durch die Verwendung eines solchen Möbel- und/oder Innenausbauteils gemäß Anspruch 25 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen des Möbel- und/oder Innenausbauteils und der Verwendung anzusehen sind. Umgekehrt sind vorteilhafte Ausgestaltungen des Möbel- und/oder Innenausbauteils und der Verwendung dieses Möbel- und/oder Innenausbauteils als vorteilhafte Ausgestaltungen des Verfahrens anzusehen.

Ein erster Aspekt der Erfindung betrifft ein Verfahren zum Herstellen eines antimikrobiell wirksamen Möbel- und/oder Innenausbauteils zum Möbel und/oder Innenausbau. Eine länger anhaltende und breitere antimikrobielle Wirksamkeit, die zudem nicht von der Anwesenheit von Licht abhängig ist, wird dadurch erzielt, dass wenigstens eine Molybdän-haltige anorganische Verbindung zumindest im Bereich einer Oberfläche des Möbel- und/oder Innenausbausteils angeordnet wird. Zum Herstellen des Möbel- und/oder Innenausbauteils wird ein Cellulose-haltiges Substrat bereitgestellt, mit einem Harz und/oder einer harzähnlichen Substanz imprägniert und/oder vorimprägniert und/oder beschichtet und die wenigstens eine Molybdän-haltige anorganische Verbindung zumindest im Bereich der Oberfläche des Substrats angeordnet. Als Molybdän-haltige anorganische Verbindung wird wenigstens ein Molybdat der Summenformel Mⁿ⁺_{z}MoO₄ verwendet, in welcher n*z=+2 beträgt und M ausgewählt wird aus einer Gruppe, die Mg, Ca, Ag, Cu, Bi, V, Ti und Zn umfasst, wobei der Massegehalt der wenigstens einen Molybdän-haltigen Verbindungen bezogen auf die Festharzmasse des Harzes zwischen 0,10 % und 10 % beträgt.

Mit anderen Worten ist es erfindungsgemäß vorgesehen, dass ein Substrat mit der wenigstens einen Molybdän-Verbindung antimikrobiell ausgestattet wird, welches Cellulose enthält und vorzugsweise zumindest überwiegend, das heißt zu mindestens 51 %, insbesondere zu mindestens 75 % und bevorzugt zu mindestens 90 % aus Cellulose besteht, wobei im Rahmen der vorliegenden Erfindung prozentuale Angaben grundsätzlich als Gewichtsprozente zu verstehen sind, sofern nichts Gegenteiliges angegeben ist. Hierdurch wird ein besonders gut zum Möbel- und Innenausbau verwendbares, antimikrobiell ausgestattetes Möbel- und/oder Innenausbauteil erhalten, welches als Halbzeug oder fertiges Bauteil ausgebildet sein kann. Darüber hinaus können Cellulose-Substrate feuchtigkeitsspeichernd und - regulierend wirken. Der Cellulose-Anteil des Substrats, welches auch als Trägerstoff oder Trägermaterial bezeichnet werden kann, kann sich grundsätzlich aus Frischfasern und/oder aus Recycling-Fasern zusammensetzen.

Unter Harzen und harzähnlichen Substanzen werden im Rahmen der vorliegenden Erfindung generell Polymere, Präpolymere und Grundstoffe für organische Kunststoffe verstanden. Harze und harzähnliche Substanzen sind üblicherweise in den gängigen organischen Lösungsmitteln löslich, jedoch schlecht löslich bzw. unlöslich in Wasser. Die Harze und harzähnlichen Substanzen können grundsätzlich natürlich vorkommende und/oder synthetische Verbindungen umfassen. Auf diese Weise kann das Möbel- und/oder Innenausbauteil besonders einfach als Laminat, Imprägnat und/oder harzbeschichtetes Substrat hergestellt werden, wodurch es sich besonders gut für den Möbel- und Innenausbau eignet. Die Beschichtung des Substrats kann in Abhängigkeit der konkreten Ausgestaltung und des späteren Einsatzzwecks des Möbel- und/oder Innenausbauteils grundsätzlich einseitig oder zwei- bzw. mehrseitig erfolgen.

Durch die Verwendung einer oder mehrerer der genannten Molybdän-haltigen anorganischen Verbindungen wird überraschenderweise neben einer guten antimikrobiellen Wirksamkeit auch eine besonders hohe Lichtstabilität, insbesondere gegenüber UV-Licht, erzielt. Somit wird das Auftreten unerwünschter Verfärbungen an der Oberfläche des erfindungsgemäß hergestellten Möbel- und/oder Innenausbauteils bzw. eines daraus hergestellten Möbels oder einer Innenausstattung zuverlässig verhindert. Darüber hinaus weisen derartige Molybdate eine besonders geringe Wasserlöslichkeit auf und sind zumindest im Wesentlichen farblos bzw. weiß. Hierdurch eignet sich das erfindungsgemäß hergestellte Möbel- und/oder Innenausbauteil besonders gut für den Möbel- und Innenraumausbau, beispielsweise in Krankenhäusern, Pflegeheimen und dergleichen, da keine zusätzlichen Farbstoffe bzw. Farbpigmente zur Bereitstellung einer neutralen, weißen Oberfläche benötigt werden. Umgekehrt kann aufgrund der neutral-weißen Farbe der Oberfläche aber auch eine einfache Einfärbung durch Zusatz entsprechender Farbstoffe bzw. Farbpigmente vorgenommen werden. Weiterhin können die Löslichkeit, die Farbe und die antimikrobielle Wirksamkeit des Möbel- und/oder Innenausbauteils optimal an den jeweiligen Einsatzzweck angepasst werden. Mit Hilfe der genannten Verbindungen, einzeln und in beliebiger Kombination, kann zudem die Adhäsion von Mikroorganismen an der Oberfläche des Möbel- und/oder Innenausbauteils zusätzlich erschwert werden. Dies verhindert besonders effektiv die Besiedelung der Oberfläche des Möbel- und/oder Innenausbauteils.

Indem der Massegehalt der wenigstens einen Molybdän-haltigen Verbindungen bezogen auf die Festharzmasse des Harzes zwischen 0,10 % und 10 % beträgt, kann der jeweilige Stoffeinsatz an Molybdän-haltige(n) Verbindung(en) optimal an die konkrete Verfahrensdurchführung und den späteren Einsatzzweck bzw. die geforderte antimikrobielle Wirksamkeit des erfindungsgemäß hergestellten Möbel- und/oder Innenausbauteils angepasst werden.

Es hat sich überraschenderweise gezeigt, dass Molybdän-haltige anorganische Verbindungen unabhängig von der Anwesenheit von Licht und bereits in sehr geringen Mengen eine starke antimikrobielle Wirkung zeigen, wenn sie im Bereich einer Oberfläche eines Möbel- und/oder Innenausbauteils angeordnet werden.

Neben einer verminderten Adhärenz von Keimen werden aber auch eine verminderte Festigkeit der Adhärenz, eine Hemmung der Proliferation, eine Hemmung der Biofilmbildung und eine antimikrobielle Wirksamkeit bei bereits erfolgter Biofilmbildung erreicht. Dies ist beispielsweise für Möbel oder Innenausbauelemente von Krankenhäusern, Pflegeheimen usw. von besonderer Bedeutung, da Mikroorganismen im Biofilm durch Antibiotika, organische Biozide, Desinfektionsmittel und dergleichen nicht oder zumindest nicht dauerhaft entfernbar sind. Nachdem diese Molybdän-Verbindungen generell zumindest unter normalen Umweltbedingungen praktisch nicht wasserlöslich sind, unterbleibt zudem ein Auswaschen oder Abbau der anorganischen Molybdän-Verbindung, so dass die antimikrobielle Wirksamkeit im Unterschied zum Stand der Technik über die gesamte Lebensdauer des Möbel- und/oder Innenausbauteils aufrechterhalten wird. Demgegenüber werden aktive Biozide mit der Zeit aus Möbel- bzw. Innenausbauteilen bzw. aus deren Oberflächen herausgelöst und in den Bakterien-Metabolismus eingebaut. Daher besteht bei aktiven Bioziden eine hohe Tendenz zur Entwicklung von Resistenzen und Kreuzresistenzen. Demgegenüber wirkt die antimikrobiell ausgestattete Oberfläche eines Möbels und/oder einer Innenausstattung, die mit Hilfe des erfindungsgemäß hergestellten Möbel- und/oder Innenausbauteils produziert sind, als passives Biozidprodukt, wodurch neben einer Langzeitwirksamkeit auch eine fehlende Resistenzentwicklung bzw. Resistenzinduktion sichergestellt werden. Wie weiterhin erkannt wurde, sind Molybdän-haltige Verbindungen für Menschen und Tiere nicht toxisch und weisen damit eine exzellente Biokompatibilität auf. Somit kann das erfindungsgemäße Verfahren im Unterschied zum Stand der Technik grundsätzlich ohne die Verwendung zusätzlicher antimikrobiell wirksamer Verbindungen wie beispielsweise Silber, insbesondere Nanosilber, bzw. Silberverbindungen, insbesondere löslicher Silberverbindungen wie Silbernitrat und dergleichen, Kupfer, Titandioxid, organische Biozide, Zeolithe, Photokatalysatoren oder dergleichen durchgeführt werden, wodurch neben einer besseren Umweltverträglichkeit des erfindungsgemäß hergestellten Möbel- und/oder Innenausbauteils auch erhebliche Kostensenkungen gegeben sind. Grundsätzlich kann vorgesehen sein, dass die wenigstens eine Molybdän-haltige Verbindung zumindest im Wesentlichen ausschließlich im Bereich der Oberfläche des Möbel- und/oder Innenausbauteils angeordnet wird, da hier die antimikrobielle Wirkung zu erzielen ist. Beispielsweise kann die Molybdän-haltige Verbindung als Schicht oder Bestandteil einer Schicht auf ein Substrat bzw. ein Trägermaterial des Möbel- und/oder Innenausbauteils aufgebracht werden. Grundsätzlich können dabei nur ein oder mehrere Bereiche der Oberfläche oder die gesamte Oberfläche des Möbel- und/oder Innenausbauteils antimikrobiell ausgestattet werden. Alternativ oder zusätzlich kann die wenigstens eine Molybdän-haltige Verbindung auch innerhalb des Möbel- und/oder Innenausbauteils angeordnet werden bzw. im Möbel- und/oder Innenausbauteil verteilt vorliegen. Hierdurch kann die antimikrobielle Wirkung auch bei einer oberflächlichen Abnutzung des Möbel- und/oder Innenausbauteils, beispielsweise wenn dieses als Tisch- oder Fußbodenbelag oder dergleichen verwendet wird, dauerhaft aufrechterhalten werden. Das Möbel- und/oder Innenausbauteil kann im Rahmen der vorliegenden Erfindung grundsätzlich als fertiges Bauteil ausgebildet werden, welches ohne weitere Verarbeitungsschritte zum Möbel- und/oder Innenausbau verwendet werden kann. Nicht-limitierende Beispiele für solche fertigen Möbel- und/oder Innenausbauteile sind mit der wenigstens einen Molybdän-haltigen Verbindung versehene Möbelfertigteile, Fußbodenplatten, Frontelemente, Fensterbänke oder Ähnliches, die ohne weitere Verarbeitungsschritte zum Möbelbau bzw. zum Innenausbau von Gebäuden verwendet werden können. Alternativ kann das Möbel- und/oder Innenausbauteil im Rahmen der vorliegenden Erfindung als eine Art Halbzeug, das heißt als "halbfertiges Material" ausgebildet werden, das erst nach weiteren Verarbeitungsschritten zum Möbelbau und/oder zum Innenausbau verwendet werden kann. Nicht-limitierende Beispiele für Halbzeug-artige Möbel- und/oder Innenausbauteile sind mit der wenigstens einen Molybdän-haltigen Verbindung versehene Imprägnate, Overlaypapiere, Dekorpapiere, Kanten- oder Leistenmaterialien oder Ähnliches, die erst nach einer entsprechenden Weiterverarbeitung, beispielsweise nach dem Aufbringen auf einen Träger, zum Bau von Möbeln bzw. zum Innenausbau von Gebäuden verwendet werden können bzw. zur antimikrobiellen Ausstattung eines Möbels bzw. Innenausbauelements dienen. Grundsätzlich stellt das erfindungsgemäß hergestellte Möbel- und/oder Innenausbauteil eine Art Werkstoffverbund dar, in welchem zusätzlich zu der wenigstens einen Molybdän-haltigen Verbindung mindestens ein weiterer Werkstoff vorliegt, der die Molybdän-haltige Verbindung im Bereich seiner Oberfläche trägt bzw. in den die Molybdän-haltige(n) Verbindung(en) eingebracht ist bzw. sind. In Abhängigkeit der konkreten Ausgestaltung des Möbel- und/oder Innenausbauteils kann dieses beispielsweise als Schicht-Verbund und/oder Teilchen-Verbund ausgebildet sein, wobei grundsätzlich auch alternative Ausgestaltungen vorgesehen sein können.

In einer vorteilhaften Ausgestaltung der Erfindung ist vorgesehen, dass wenigstens eine Molybdän-haltige anorganische Verbindung verwendet wird, welche dotiert oder undotiert und kristallwasserfrei oder kristallwasserhaltig ist. Unter einer Dotierung wird im Rahmen der vorliegenden Erfindung das Einbringen von Fremdatomen in die Molybdän-haltige Verbindung verstanden, wodurch eine optimale Anpassbarkeit der antimikrobiellen Wirkung an unterschiedliche Einsatzzwecke und Anforderungsprofile ermöglicht ist. Die Menge an Fremdatomen beträgt dabei grundsätzlich zwischen etwa 0,1 und 1000 ppm, vorzugsweise zwischen 100 ppm und 600 ppm, insbesondere zwischen 300 ppm und 550 ppm. Alternativ oder zusätzlich können sowohl kristallwasserfreie Molybdän-Verbindungen als auch Hydrate, das heißt je nach Verbindung Monohydrate, Dihydrate, Trihydrate usw. der anorganischen Molybdän-Verbindungen, einzeln oder in beliebiger Kombination verwendet werden. Ebenso kann die wenigstens eine anorganische Molybdän-Verbindungen in einer beliebigen Kristallkonfiguration bzw. Kristallgitterstruktur, als Mischkristall und/oder amorph vorliegen.

In einer weiteren vorteilhaften Ausgestaltung der Erfindung ist vorgesehen, dass eine weitere Molybdän-haltige anorganische Verbindung aus einer Gruppe ausgewählt wird, die MoO₂, MoO₃₋₂, insbesondere MoO_{2,35} bis MoO_{2,97}, MoO₃, Molybdänoxid-Hydrate, Molybdänhydroxide, Molybdänoxidhydroxide, Molybdänsesquioxide, Molybdänkarbid, Molybdännitrid, Molybdänsilizid, Molybdänsulfid, Cyanomolybdate, Molybdänhexacarbonyl, Molybdänacetylacetonat, Polyoxomolybdate umfasst. Mit Hilfe dieser Verbindungen, einzeln oder in beliebiger Kombination, werden auf besonders einfache und kostengünstige Weise ein möglichst niedriger Oberflächen-pH-Wert und damit eine besonders gute antimikrobielle Wirksamkeit erzielt, da sich alle genannten Verbindungen zumindest bei Kontakt mit Wasser in Molybdänsäure und/oder höhere saure Oligomolybdate umwandeln. Darüber hinaus weisen zumindest einige der genannten Verbindungen auch ein vergleichsweise hohes Oxidationspotential, magnetische Eigenschaften und/oder elektrische Leitfähigkeit auf, wodurch zusätzliche antimikrobielle Effekte erzielt werden können.

In einer weiteren vorteilhaften Ausgestaltung der Erfindung ist vorgesehen, dass als weitere Molybdat-Verbindung Ammoniumdimolybdat und/oder Ammoniumheptamolybdat und/oder wenigstens eine Verbindung der Summenformel Mⁿ⁺_{z}MoO₄ verwendet wird, in welcher n*z=+2 beträgt und M ausgewählt wird aus einer Gruppe, die Na und K umfasst. Durch die Verwendung einer oder mehrerer der genannten Verbindungen wird überraschenderweise neben einer guten antimikrobiellen Wirksamkeit auch eine besonders hohe Lichtstabilität, insbesondere gegenüber UV-Licht, erzielt. Somit wird das Auftreten unerwünschter Verfärbungen an der Oberfläche des erfindungsgemäß hergestellten Möbel- und/oder Innenausbauteils bzw. eines daraus hergestellten Möbels oder einer Innenausstattung zuverlässig verhindert. Darüber hinaus sind derartige Molybdate zumindest im Wesentlichen farblos bzw. weiß. Hierdurch eignet sich das erfindungsgemäß hergestellte Möbel- und/oder Innenausbauteil besonders gut für den Möbel- und Innenraumausbau, beispielsweise in Krankenhäusern, Pflegeheimen und dergleichen, da keine zusätzlichen Farbstoffe bzw. Farbpigmente zur Bereitstellung einer neutralen, weißen Oberfläche benötigt werden. Umgekehrt kann aufgrund der neutral-weißen Farbe der Oberfläche aber auch eine einfache Einfärbung durch Zusatz entsprechender Farbstoffe bzw. Farbpigmente vorgenommen werden. In der genannten Verbindungsklasse kann Molybdän grundsätzlich teilweise oder vollständig durch Wolfram ersetzt sein.

Weiterhin können die Löslichkeit, die Farbe und die antimikrobielle Wirksamkeit des Möbel- und/oder Innenausbauteils optimal an den jeweiligen Einsatzzweck angepasst werden. Mit Hilfe der genannten Verbindungen, einzeln und in beliebiger Kombination, kann zudem die Adhäsion von Mikroorganismen an der Oberfläche des Möbel- und/oder Innenausbauteils zusätzlich erschwert werden. Dies verhindert besonders effektiv die Besiedelung der Oberfläche des Möbel- und/oder Innenausbauteils.

In einer weiteren vorteilhaften Ausgestaltung der Erfindung ist vorgesehen, dass als weitere Molybdän-haltige anorganische Verbindung eine Molybdän- und Wolfram-haltige anorganische Mischverbindung verwendet wird und/oder dass zusätzlich zu der Molybdän-haltigen anorganischen Verbindung wenigstens eine Wolfram-haltige Verbindung verwendet wird. Mit anderen Worten ist es erfindungsgemäß vorgesehen, dass zusätzlich zur wenigstens einen Molybdän-haltigen Verbindung auch eine Wolfram-haltige Verbindung zur Herstellung des Möbel- und/oder Innenausbauteils verwendet und im Bereich der Oberfläche angeordnet wird. Hierdurch kann ebenfalls eine vorteilhafte Steigerung der antimikrobiellen Wirksamkeit erzielt werden. Die wenigstens eine zusätzliche Wolfram-Verbindung kann beispielsweise ausgewählt werden aus einer Gruppe, die Ammoniummetawolframate ((NH₄)₆[α-H₂W₁₂O₄₀]*3H₂O, AMT), Wolframsäure, Wolframoxidhydrate, Wolframoxid, Wolframsuboxid, insbesondere WO_{2,35} bis WO_{2,97}, und Polyoxowolframate umfasst. Alternativ oder zusätzlich ist es vorgesehen, dass eine Molybdän- und Wolfram-haltige anorganische Mischverbindung verwendet wird. Aufgrund der ähnlichen Atomradien von Molybdän und Wolfram können beide Elemente in Verbindungen häufig teilweise gegeneinander ausgetauscht werden. Solche Molybdän-Wolfram-Mischverbindungen weisen in der Regel eine deutlich geringere Wasserlöslichkeit als die jeweiligen Molybdän- bzw. Wolfram-Reinverbindungen auf, ohne dass sich die antimikrobielle Wirksamkeit verschlechtert. Somit wird ein Auswaschen des antimikrobiellen Wirkstoffs besonders zuverlässig verhindert, so dass sich das erfindungsgemäß hergestellte Möbel- und/oder Innenausbauteils besonders gut zur Herstellung von Möbel- und/oder Innenausbauelementen eignet, die häufig gesäubert werden müssen bzw. in häufigem Kontakt mit Wasser stehen.

In einer weiteren vorteilhaften Ausgestaltung der Erfindung ist vorgesehen, dass die Molybdän- und Wolfram-haltige Mischverbindung mit einer Fluor-Verbindung, insbesondere mit einem Oxyfluorid, WOF₄, WO₂F₂, Calciumfluorid und/oder Fluorapatit, dotiert wird. Auch hierdurch kann die antimikrobielle Wirksamkeit vorteilhaft verbessert und optimal an den jeweiligen Einsatzzweck des Möbel- und/oder Innenausbauteils angepasst werden. Eine Dotierung mit einer Fluor-Verbindung bietet den zusätzlichen Vorteil, dass die Adhäsion von Mikroorganismen an der Oberfläche des Mischoxids zusätzlich erschwert wird. Dies verhindert somit die Besiedelung von mit dem Mischoxid versehenen Oberflächen und verbessert damit den antimikrobiellen Effekt zusätzlich. Vorzugsweise werden hierbei Fluor-Verbindungen mit einer möglichst geringen Wasserlöslichkeit verwendet, um ebenfalls ein Auswaschen zu verhindern oder zumindest zu verlangsamen. Nicht abschließende Beispiele für geeignete Verbindungen sind Calciumfluorid (CaF₂) und Fluorapatit (Ca₅[F|(PO₄)₃]). Die Verwendung von WOF₄, WO₂F₂ und/oder korrespondierenden Molybdänoxyfluoriden bietet den zusätzlichen Vorteil, dass diese gleichzeitig zur Herstellung des Mischoxids und zu dessen Dotierung mit Fluorid-Ionen bzw. Fluor-Verbindungen beitragen.

Alternativ oder zusätzlich ist es vorgesehen, dass als Molybdän- und Wolfram-haltige anorganische Mischverbindung ein Mischoxid der Summenformel MoₓW₁₋ₓA_{y}O_{z} verwendet wird, in welcher 0<x<1, 0≤y≤2 und 2,0≤z≤3,0 betragen und A ein von Mo und W verschiedenes Metall-Ion und/oder NH₄⁺ bezeichnet. Die Herstellung derartiger Mischoxide ist wie bereits erwähnt insbesondere aufgrund der ähnlichen Atomradien von Molybdän und Wolfram möglich. Die Erfinder haben festgestellt, dass die antimikrobielle Wirksamkeit von derartigen Mischoxiden stärker ausgeprägt ist, als es ein rein additiver Effekt von Mischungen aus Molybdänoxid und Wolframoxiden erklären würde. Darüber hinaus besitzen die Mischoxide eine deutlich geringere Wasserlöslichkeit als die entsprechenden Molybdän- und Wolframoxide, wodurch ihre antimikrobielle Wirkung auch in feuchten Umgebungen sowie bei Anwendungen unter Wasser besonders lange aufrechterhalten wird. Das Mischoxid kann in einfachster Ausgestaltung (y=0) nur Mo, W, O und gegebenenfalls Leerstellen im Kristallgitter enthalten und undotiert sein. Alternativ kann das Mischoxid dotiert sein. Wie bereits erwähnt, kann das Mischoxid neben Mo, W und O auch noch ein oder mehrere von Mo und W verschiedene Metall-Ionen und/oder Ammonium-Ionen innerhalb der durch y definierten Grenzen enthalten. Weiterhin kann vorgesehen sein, dass mehrere unterschiedliche Mischoxide bzw. ein heterogenes Mischoxid mit innerhalb der angegebenen Summenformel variierenden Bestandteilen verwendet werden.

Weitere Vorteile ergeben sich, wenn A ausgewählt wird aus einer Gruppe, die Na, K, Mg, Ca, Ag, Cu, Bi, V, Ti und Zn umfasst. Hierdurch können die Löslichkeit, die Farbe und die antimikrobielle Wirksamkeit des Möbel- und/oder Innenausbauteils optimal an den jeweiligen Einsatzzweck angepasst werden. Mit Hilfe der genannten Verbindungen, einzeln und in beliebiger Kombination, kann zudem die Adhäsion von Mikroorganismen an der Oberfläche des Möbel- und/oder Innenausbauteils zusätzlich erschwert werden. Dies verhindert besonders effektiv die Besiedelung der Oberfläche des Möbel- und/oder Innenausbauteils.

In einer weiteren vorteilhaften Ausgestaltung der Erfindung ist vorgesehen, dass die wenigstens eine Molybdän-haltige anorganische Verbindung in Form von Partikeln mit einer mittleren Korngröße zwischen 0,1 µm und 200 µm verwendet wird. Bevorzugt sind mittlere Partikeldurchmesser zwischen 0,1 µm und 5 µm. Hierdurch wird eine besonders hohe antimikrobielle Wirksamkeit bei möglichst geringem Materialeinsatz an Molybdän-haltigen Verbindungen sichergestellt. Zusätzlich kann die Durchführung des Verfahrens optimal an den späteren Einsatzzweck des Möbel- und/oder Innenausbauteils angepasst werden. Die Verwendung von Partikeln mit den genannten mittleren Korngrößen bietet den besonderen Vorteil, dass einerseits eine besonders hohe antimikrobielle Wirksamkeit realisiert werden kann und dass das erfindungsgemäß herstellte Möbel- und/oder Innenausbauteil andererseits frei von Nanopartikeln hergestellt werden kann.

Weitere Vorteile ergeben sich, indem zusätzlich zu der wenigstens einen Molybdän-haltigen anorganischen Verbindung wenigstens ein Hydrophilierungs- und/oder Hygroskopierungsmittel zumindest im Bereich der Oberfläche des Möbel- und/oder Innenausbauteils angeordnet wird. Hierdurch wird die antimikrobielle Wirksamkeit des erfindungsgemäß hergestellten Möbel- und/oder Innenausbauteils in besonders trockenen Räumen, das heißt bei sehr geringer Luftfeuchtigkeit und dementsprechend geringen verfügbaren Wassermengen, die für das Ausbilden einer sauren Oberflächengrenzschicht wichtig sind, vorteilhaft gesteigert. Das Hydrophilierungs- und/oder Hygroskopierungsmittel kann grundsätzlich gemeinsam mit oder getrennt von der wenigstens Molybdän-haltigen Verbindung verarbeitet werden. Weiterhin kann vorgesehen sein, dass die wenigstens eine Molybdän-haltige Verbindung mit dem Hydrophilierungs- und/oder Hygroskopierungsmittel beschichtet und/oder als Agglomerat verwendet wird. Hierdurch wird auf einfache Weise eine räumliche Nähe der beiden Verbindungsklassen sichergestellt, so dass die Molybdän-Verbindung auch unter besonders trockenen Bedingungen unmittelbar mit der zur Senkung des pH-Werts erforderlichen Feuchtigkeit versorgt wird. Beispiele für geeignete Hydrophilierungs- und/oder Hygroskopierungsmittel sind organische Säuren wie etwa Abietinsäure, Arachidonsäure, Arachinsäure, Behensäure, Caprinsäure, Capronsäure, Cerotinsäure, Erucasäure, Fusarinsäure, Fumarsäure, Gallensäuren, Icosensäure, Isophthalsäure, Lactonsäure, Laurinsäure, Lignocerinsäure, Linolensäure, Lävopimarsäure, Linolsäure, Margarinsäure, Melissinsäure, Montansäure, Myristinsäure, Neoabietinsäure, Nervonsäure, Nonadecansäure, Ölsäure, Palmitinsäure, Palmitoleinsäure, Pelargonsäure (Nonansäure), Pimarsäure, Palustrinsäure, Palmitinsäure, Rizinolsäure, Stearinsäure, Sorbinsäure, Tanninsäure, Tridecansäure, Undecansäure und Vulpinsäure. Weiterhin haben sich Malonsäure, Maleinsäure und Maleinsäureanhydrid, Milchsäure, Essigsäure, Zitronensäure, Salicylsäure und Ascorbinsäure (Vitamin C) sowie deren Salze als vorteilhaft gezeigt. Ebenfalls vorgesehen sein können Säureanhydride, ampholytische Substanzen, Puffersysteme, polymere Säuren, lonentauscherharze, sowie Säuresulfonate und Säurehalogenide. Die Verwendung von Säuren als Hydrophilierungs- und/oder Hygroskopierungsmittel bietet den zusätzlichen Vorteil, dass die Umwandlung der wenigstens einen Molybdän-Verbindung in Molybdänsäure befördert wird. Es ist allerdings zu betonen, dass grundsätzlich auch andere Hydrophilierungs- und/oder Hygroskopierungsmittel verwendet werden können. Beispielsweise eignen sich auch Kieselgele, pyrogenes Siliciumdioxid (fumed silica) und Zeolithe, einzeln und in beliebiger Kombination, als Hydrophilierungs- und/oder Hygroskopierungsmittel, da diese eine Art Feuchtigkeitspuffer bilden. Vorzugsweise werden mikronisierte Kieselgele mit einer Partikelgrö-ßenverteilungen im Bereich zwischen 0,1 µm bis 25 µm mittlerer Partikeldurchmesser verwendet. Dadurch kann eine Mindestrestfeuchte im Produkt in weiten Bereichen variiert und eingestellt werden. Weitere geeignete Hydrophilierungs- und/oder Hygroskopierungsmittel umfassen die unter den Handelsnamen Crodamide ER/BR (Fettsäureamide), Hostastat (Ethoxylierte Alkylamine), Crodafos MCA-SO (feste Cetyl-Phosphatester), Lubrophos LM-400E (ethoxylierte Nonylphenolphosphate), Pluronic PE 8100 (nichtionische Tenside, Block-Copolymere, in denen die zentrale Polypropylenglycol-Gruppe von zwei Polyethyleneglycol-Gruppen flankiert wird), Surfynol 440 (ethoxyliertes Benetzungsmittel), Orevac PP CA100 (chemisch funktionalisiertes Polypropylen mit hohem Gehalt an gegraftetem Maleinsäureanhydrid), Crodamol OHS (Propylenglycolpolyethyleneglycol-3-isocetyletheracetat), Pluronic PE 8100 (nicht-ionisches Tensid), Flerol KFC (Polyglycolether), BYK P4100 (Copolymer mit Säuregruppen, welches frei von Silikonen und Waxen ist), Disperplast 1150 (polarer, saurer Ester von langkettigen Alkoholen), Disperplast 1018 (Copolymer mit pigmentaffinen Gruppen), Atmer 129MB (pflanzlicher Glycerolester) und Palsgaard DMG0093 (Emulgator basierend auf destillierten Monoglyceriden von pflanzlichen Fettsäuren) erhältlichen Verbindungen, die einzeln und in beliebiger Kombination verwendet werden können.

In einer weiteren vorteilhaften Ausgestaltung der Erfindung ist vorgesehen, dass das Cellulose-haltiges Substrat aus einer Gruppe ausgewählt wird, die Papier, insbesondere Dekorpapier und Overlaypapier, Karton, insbesondere Kernkarton, Pappe, Halbzellstoffe und Holzstoffe, insbesondere Spanplatten und Faserplatten, umfasst. Die Verwendung eines Dekorpapiers und/oder eines Overlaypapiers als Substrat bietet den besonderen Vorteil, dass neben einer antimikrobiellen Ausstattung der Oberfläche des Möbel- und/oder Innenausbauteils auch eine optimale Anpassung des optischen Erscheinungsbilds vorgenommen werden kann. Darüber hinaus können mit Hilfe eines als Dekorpapier und/oder Overlaypapier ausgebildeten Möbel- und/oder Innenausbauteils unterschiedlichste Trägerstoffe sowie bereits vorhandene Möbel, Innenausbauelemente und dergleichen großflächig antimikrobiell ausgestattet werden, indem das Dekorpapier und/oder Overlaypapier auf die betreffende Oberfläche des antimikrobiell auszustattenden Trägerstoffs appliziert, beispielsweise auflaminiert, aufgeklebt und/oder aufgepresst wird. Dementsprechend sind insbesondere erfindungsgemäß hergestellte Möbel- und/oder Innenausbauteile mit Cellulose-haltigen Substraten aus Papier bzw. auf Papierbasis generell eher als Halbzeuge anzusehen, während Möbel- und/oder Innenausbauteile mit Cellulose-haltigen Substraten aus Holzstoffen generell eher als fertige Bauteile angesehen werden können, die dementsprechend ohne weitere Verarbeitungsschritte zum Möbel- oder Innenausbau verwendet werden können.

Eine besonders schnelle und flexible Herstellung des antimikrobiellen Möbel- und/oder Innenausbauteils wird in weiterer Ausgestaltung der Erfindung dadurch erreicht, dass das Substrat zumindest bereichsweise mit einem Lack lackiert wird, wobei der Lack die wenigstens eine Molybdän-haltige anorganische Verbindung enthält und/oder wobei die wenigstens eine Molybdän-haltige anorganische Verbindung in die Lackschicht eingearbeitet und/oder auf die Lackschicht aufgebracht wird. Mit Hilfe eines derartigen Lacks können vorteilhafter Weise ebenfalls nahezu beliebige Substrate und Trägerstoffe antimikrobiell ausgestattet werden. Weiterhin können bereits vorhandene Möbel- und/oder Innenausbauteile schnell und kostengünstig nachträglich antimikrobiell ausgestattet werden. Ebenso können abgenutzte Möbel- und Innenausbauteile durch einfaches Lackieren wieder mit antimikrobiellen Eigenschaften versehen werden. Der jeweils verwendete Lack kann zudem optimal an den gewünschten Verwendungszweck des Möbel- und Innenausbauteils angepasst werden. Beispielsweise kann ein Lack verwendet werden, der neben einem Bindemittel zusätzlich Füllstoffe, Pigmente, Lösemittel, Harze und/oder sonstige Additiven enthält, um neben der antimikrobiellen Wirkung auch eine schützende und/oder dekorative Wirkung zu erzielen und/oder um das Möbel- und Innenausbauteil mit besonderen zusätzlichen Oberflächeneigenschaften auszustatten.

Weitere Vorteile ergeben sich dadurch, dass das Substrat vor dem Lackieren gereinigt und/oder geschliffen und/oder grundiert wird. Hierdurch eine zuverlässige Haftung des Lacks auf dem Substrat gewährleistet. Alternativ oder zusätzlich ist es vorgesehen, dass der Lack mittels eines Tiefdruck- und/oder Digitaldruckverfahrens auf das Substrat aufgebracht wird. Die Verwendung eines Tiefdruckverfahrens ermöglicht dabei eine besonders wirtschaftliche Herstellung des Möbel- und/oder Innenausbauteils, während die Verwendung eines Digitaldruckverfahrens insbesondere eine hohe gestalterische Freiheit ermöglicht, da keine statische Druckform benötigt wird.

Eine besonders hohe mechanische Belastbarkeit und Oberflächengüte wird in weiterer Ausgestaltung der Erfindung dadurch erzielt, dass als Lack ein UV-härtbarer Lack und/oder ein Acryllack und/oder ein Silikon-haltiger Lack und/oder ein Lack, welcher wenigstens ein thermoplastisches Elastomer enthält, und/oder ein Reaktivlack verwendet wird. Im Fall der Verwendung eines UV-härtbaren Lacks hat sich die Verwendung von Licht- und UV-stabilen Molybdän-haltigen Verbindungen als vorteilhaft gezeigt, um Verfärbungen zu vermeiden. Umgekehrt können aber auch Licht- bzw. UV-labile Molybdän-haltige Verbindungen verwendet und gleichzeitig mit der Aushärtung des Lacks umgewandelt werden. Lacke auf Silikon-Basis besitzen aufgrund ihres geringen Anteils an organischen Gruppen den Vorteil einer sehr geringen Änderung ihres Filmvolumens während der Härtung. Hierdurch können sehr dichte Schichten mit guter Filmfestigkeit erzeugt werden, in denen die wenigstens eine Molybdän-haltige Verbindung aufgenommen bzw. gehalten ist. Darüber hinaus weisen Silikon-Lacke eine hohe thermische Beständigkeit auf und eignen sich daher zur Beschichtung von Möbel- und/oder Innenausbauteilen, die zur Verwendung im Bereich von Küchen, Öfen oder sonstigen Wärmequellen vorgesehen sind. Die Verwendung von thermoplastischen Elastomeren erlaubt die Herstellung von Oberflächen mit gummielastischen Eigenschaften, in welchen die wenigstens eine Molybdän-haltige Verbindung aufgenommen bzw. gehalten ist. Das oder die thermoplastischen Elastomere können beispielsweise den Klassen TPO, TPV, TPU, TPC, TPS oder TPA bzw. beliebigen Mischungen hieraus angehören, wobei sich insbesondere thermoplastische Elastomere auf Urethanbasis (TPUs) als vorteilhaft gezeigt haben. Die Verwendung eines Reaktivlacks erlaubt die Herstellung von mechanisch besonders widerstandsfähigen Oberflächen, wobei der Reaktivlack durch chemische Reaktion vorzugsweise bereits bei Raumtemperatur erhärtet. Der Reaktivlack kann grundsätzlich als Ein- oder Mehrkomponentenlack vorliegen bzw. verwendet werden.

In einer weiteren vorteilhaften Ausgestaltung der Erfindung ist vorgesehen, dass der Massegehalt der wenigstens einen Molybdän-haltigen Verbindungen bezogen auf den Festharzgehalt des Lacks zwischen zwischen 0,15 % und 5 % und vorzugsweise zwischen 0,2 % und 3 %, beispielsweise 1,5 %, 2 % oder 2,5 % beträgt. Mit anderen Worten ist es erfindungsgemäß vorgesehen, dass das Substrat mit einem Lack beschichtet wird, der bezogen auf seinen Festharz- bzw. Feststoffgehalt, das heißt unabhängig von der Art und Menge eines etwaigen Lösungs- oder Dispergiermittels, zwischen 0,15 % und 5 % der wenigstens einen Molybdän-haltigen Verbindungen enthält. Wenn im Rahmen des erfindungsgemäßen Verfahrens mehrere Molybdän-haltige Verbindungen verwendet werden, beträgt vorzugsweise auch die Summe aller verwendeten Molybdän-haltigen Verbindungen bezogen auf den Festharzgehalt zwischen 0,1 % und 10 %, wobei in diesem Fall auch höhere Anteile vorgesehen sein können. Gleiches gilt für den Fall, dass ein Teil des Molybdäns in der oder den verwendeten anorganischen Verbindungen gegen Wolfram ausgetauscht bzw. durch Wolfram ergänzt ist.

Weitere Vorteile ergeben sich dadurch, dass ein Massengehalt des Hydrophilierungs- und/oder Hygroskopierungsmittels bezogen auf den Festharzgehalt des Lacks zwischen 0,1 % und 15 % beträgt. Beispielsweise kann ein Massengehalt gewählt werden, der zwischen 1 % und 5 %, insbesondere im Bereich von 2 % bis 4 % liegt. Weiterhin kann der Massengehalt des Hydrophilierungs- und/oder Hygroskopierungsmittels derart gewählt werden, dass er dem Massengehalt der Molybdän-Verbindung entspricht. Beispielsweise können 2 % des Hydrophilierungs- und/oder Hygroskopierungsmittels verwendet werden, wenn der Massengehalt der Molybdän-haltigen Verbindung bezogen auf den Festharzgehalt des Lacks ebenfalls 2 % beträgt. Alternativ kann der Massengehalt des Hydrophilierungs- und/oder Hygroskopierungsmittels etwa das Doppelte des Massengehalts der Molybdän-Verbindung betragen. Beispielsweise können 4 % Hydrophilierungs- und/oder Hygroskopierungsmittel verwendet werden, wenn der Massengehalt der Molybdän-haltigen Verbindung bezogen auf den Festharzgehalt des Lacks 2 % beträgt.

In einer weiteren vorteilhaften Ausgestaltung der Erfindung ist vorgesehen, dass das Harz als Lösung, Suspension und/oder Dispersion mit einem Festharzgehalt zwischen 40 Gew.-% und 70 Gew.-%, insbesondere zwischen 50 Gew.-% und 60 Gew.-%, verwendet wird. Dies ermöglicht eine besonders schnelle Imprägnierung bzw. Beschichtung des Substrats mit möglichst kurzen Trocknungszeiten. Alternativ oder zusätzlich ist vorgesehen, dass das Harz ausgewählt wird aus einer Gruppe, die Phenol-Harze, Phenolformaldehyd-Harze, Melamin-Harze, Melaminformaldehyd-Harze, Harnstoff-Harze, Harnstoffformaldehyd-Harze und polymeres Diphenylmethandiisocyanat sowie beliebige Mischungen daraus umfasst. Die genannten Polykondensation-Harze eignen sich einerseits besonders gut zur Imprägnierung und/oder Beschichtung von Cellulose-haltigen Substraten und setzen andererseits beim Abbinden Wasser frei, welches vorteilhaft der wenigstens einen Molybdän-haltigen Verbindung zur Umwandlung in Molybdänsäure zur Verfügung steht.

In weiterer Ausgestaltung der Erfindung kann das Verfahren besonders wirtschaftlich und schnell durchgeführt werden, wenn das Substrat bezogen auf sein Trockengewicht mit 30 Gew.-% bis 600 Gew.-% Harz, bei Dekorpapieren insbesondere mit 100 Gew.-% bis 180 Gew.-% und/oder bei Overlaypapieren insbesondere mit 350 Gew.-% bis 550 Gew.-%, imprägniert wird.

Weiterhin kann vorgesehen sein, dass das Substrat mit einer Harzmenge zwischen 10 g/m² und 150 g/m², bei Dekorpapieren insbesondere zwischen 70 g/m² und 120 g/m² und/oder bei Overlaypapieren insbesondere zwischen 15 g/m² und 35 g/m² beschichtet wird.

In einer weiteren vorteilhaften Ausgestaltung der Erfindung ist vorgesehen, dass das Harz die wenigstens eine Molybdän-haltige anorganische Verbindung enthält und/oder dass die wenigstens eine Molybdän-haltige anorganische Verbindung in das Harz eingearbeitet und/oder auf das Harz aufgebracht wird. Dies stellt eine besonders flexible Möglichkeit zur antimikrobiellen Ausstattung zumindest der Oberfläche des Möbel- und/oder Innenausbauteils dar. Im Fall eines als Imprägnat ausgebildeten Möbel- und/oder Innenausbauteils kann auf diese Weise das gesamte Möbel- und/oder Innenausbauteil vorteilhaft mit dem antimikrobiell ausgestatteten Harz und damit mit der wenigstens einen Molybdän-haltigen Verbindung durchtränkt werden. Alternativ oder zusätzlich ist es erfindungsgemäß vorgesehen, dass der Massegehalt der wenigstens einen Molybdän-haltigen Verbindungen bezogen auf die Festharzmasse des Harzes zwischen 0,10 % und 10 %, insbesondere zwischen 0,15 % und 5 % und vorzugsweise zwischen 0,2 % und 3 % beträgt. Hierdurch kann der jeweilige Stoffeinsatz an Molybdän-haltige(n) Verbindung(en) optimal an die konkrete Verfahrensdurchführung und den späteren Einsatzzweck bzw. die geforderte antimikrobielle Wirksamkeit des erfindungsgemäß hergestellten Möbel- und/oder Innenausbauteils angepasst werden.

In einer weiteren vorteilhaften Ausgestaltung der Erfindung ist vorgesehen, dass ein Massengehalt des Hydrophilierungs- und/oder Hygroskopierungsmittels bezogen auf die Festharzmasse des Harzes zwischen 0,1 % und 15 % beträgt. Beispielsweise kann ein Massengehalt gewählt werden, der zwischen 1 % und 5 %, insbesondere im Bereich von 2 % bis 4 % liegt. Weiterhin kann der Massengehalt des Hydrophilierungs- und/oder Hygroskopierungsmittels derart gewählt werden, dass er dem Massengehalt der Molybdän-Verbindung entspricht. Beispielsweise können 2 % des Hydrophilierungs- und/oder Hygroskopierungsmittels verwendet werden, wenn der Massengehalt der Molybdän-haltigen Verbindung bezogen auf die Festharzmasse des Harzes ebenfalls 2 % beträgt. Alternativ kann der Massengehalt des Hydrophilierungs- und/oder Hygroskopierungsmittels etwa das Doppelte des Massengehalts der Molybdän-Verbindung betragen. Beispielsweise können 4 % Hydrophilierungs- und/oder Hygroskopierungsmittel verwendet werden, wenn der Massengehalt der Molybdän-haltigen Verbindung bezogen auf die Festharzmasse des Harzes 2 % beträgt.

Weitere Vorteile ergeben sich, wenn das imprägnierte und/oder beschichtete Substrat, insbesondere bei 100 °C bis 220 °C und/oder mittels eines Schwebetrockners, getrocknet und/oder zugeschnitten und/oder aufgerollt wird. Hierdurch kann das Möbel- und/oder Innenausbauteil je nach gewünschter Weiterverarbeitung optimal gelagert und transportiert werden. Eine Trocknungstemperatur zwischen 100 °C und 220 °C hat sich insbesondere bei harzbeschichteten und/oder -imprägnierten Substraten bzw. Möbel- und/oder Innenausbauteilen als vorteilhaft gezeigt. Bei Bedarf kann gleichzeitig mit der Trocknung eine Auspolymerisierung bzw. Aushärtung des Harzes erfolgen. Alternativ kann eine Temperatur gewählt werden, bei welcher Polymerisierungsreaktionen vollständig oder zumindest überwiegend unterbleiben. Schwebetrockner eignen sich insbesondere zur Trocknung von flächenförmigen Substraten bzw. Möbel- und/oder Innenausbauteilen und verhindern besonders zuverlässig eine Beschädigung der antimikrobiell ausgestatteten Oberfläche(n). Alternativ oder zusätzlich kann das Substrat bzw. das Möbel- und/oder Innenausbauteil mit wenigstens einem weiteren Werkstoff, insbesondere einem Holzwerkstoff und/oder einem Vorimprägnat, verpresst werden, wodurch komplexe Schichtverbundstoffe erhältlich sind.

In einer weiteren vorteilhaften Ausgestaltung der Erfindung ist vorgesehen, dass das Möbel- und/oder Innenausbauteil als Kante, insbesondere als Dünnspan-Stützkante oder Melaminkante ausgebildet wird, wobei die wenigstens eine Molybdän-haltige anorganische Verbindung zumindest im Bereich einer Oberfläche der Kante angeordnet wird. Hierdurch kann das erfindungsgemäß hergestellte Möbel- und/oder Innenausbauteil insbesondere zur Abdeckung und Kaschierung von Seiten-, Schmal- und/oder Schnittflächen weiterer Bauteile verwendet werden, wodurch neben einer antimikrobiellen Ausstattung der betreffenden Bauteile auch ein Eindringen von Schmutz und Mikroorganismen in das Bauteil zuverlässig verhindert wird. Darüber hinaus kann das optische Erscheinungsbild der Kante besonders einfach an die optische Erscheinung des zu kaschierenden Bauteils angepasst werden, so dass mit Hilfe des erfindungsgemäß hergestellten Möbel- und/oder Innenausbauteils nahezu beliebige Gestaltungskonzepte für Möbel und Innenräume umsetzbar sind. Das als Kante ausgebildete Möbel- und/oder Innenausbauteil kann beispielsweise einen Kunststoff umfassen, in den die wenigstens eine Molybdän-haltige Verbindung eingearbeitet ist. Weiterhin kann das als Kante ausgebildete Möbel- und/oder Innenausbauteil als Schichtstoff, beispielsweise als Multiplexkante, ausgebildet sein und unterschiedliche Materiallagen aufweisen. Ebenso kann die Kante als antimikrobiell wirksame Furnierkante, Massivholzkante, Echtholzkante, Softkante, Dünnspan-Stützkante, Stegkante, Blindkante, Grundierkante usw. ausgebildet sein.

Ein zweiter Aspekt der Erfindung betrifft ein antimikrobiell wirksames Möbel- und/oder Innenausbauteil, bei welchem vorgesehen ist, dass dieses ein Cellulose-haltiges Substrat umfasst, das mit einem Harz und/oder einer harzähnlichen Substanz imprägniert und/oder vorimprägniert und/oder beschichtet ist, wobei wenigstens eine Molybdän-haltige anorganische Verbindung zumindest im Bereich der Oberfläche des Substrats angeordnet ist. Die wenigstens eine Molybdän-haltige anorganische Verbindung umfasst wenigstens ein Molybdat der Summenformel Mⁿ⁺_{z}MoO₄, in welcher n*z=+2 beträgt und M ausgewählt wird aus einer Gruppe, die Mg, Ca, Ag, Cu, Bi, V, Ti und Zn umfasst, wobei der Massegehalt der wenigstens einen Molybdän-haltigen Verbindungen bezogen auf die Festharzmasse des Harzes zwischen 0,10 % und 10 % beträgt.

Mit anderen Worten ist es erfindungsgemäß vorgesehen, dass ein Substrat mit der wenigstens einen Molybdän-Verbindung antimikrobiell ausgestattet ist, welches Cellulose enthält und vorzugsweise zumindest überwiegend, das heißt zu mindestens 51 %, insbesondere zu mindestens 75 % und bevorzugt zu mindestens 90 % aus Cellulose besteht, wobei im Rahmen der vorliegenden Erfindung prozentuale Angaben grundsätzlich als Gewichtsprozente zu verstehen sind, sofern nichts Gegenteiliges angegeben ist. Hierdurch wird ein besonders gut zum Möbel- und Innenausbau verwendbares, antimikrobiell ausgestattetes Möbel- und/oder Innenausbauteil erhalten, welches als Halbzeug oder fertiges Bauteil ausgebildet sein kann. Darüber hinaus können Cellulose-Substrate feuchtigkeitsspeichernd und - regulierend wirken. Der Cellulose-Anteil des Substrats, welches auch als Trägerstoff oder Trägermaterial bezeichnet werden kann, kann sich grundsätzlich aus Frischfasern und/oder aus Recycling-Fasern zusammensetzen.

Unter Harzen und harzähnlichen Substanzen werden im Rahmen der vorliegenden Erfindung generell Polymere, Präpolymere und Grundstoffe für organische Kunststoffe verstanden. Harze und harzähnliche Substanzen sind üblicherweise in den gängigen organischen Lösungsmitteln löslich, jedoch schlecht löslich bzw. unlöslich in Wasser. Die Harze und harzähnlichen Substanzen können grundsätzlich natürlich vorkommende und/oder synthetische Verbindungen umfassen. Auf diese Weise kann das Möbel- und/oder Innenausbauteil besonders einfach als Laminat, Imprägnat und/oder harzbeschichtetes Substrat hergestellt sein, wodurch es sich besonders gut für den Möbel- und Innenausbau eignet. Die Beschichtung des Substrats kann in Abhängigkeit der konkreten Ausgestaltung und des späteren Einsatzzwecks des Möbel- und/oder Innenausbauteils grundsätzlich einseitig oder zwei- bzw. mehrseitig erfolgen.

Durch die Verwendung einer oder mehrerer der genannten Molybdän-haltigen anorganischen Verbindungen wird überraschenderweise neben einer guten antimikrobiellen Wirksamkeit auch eine besonders hohe Lichtstabilität, insbesondere gegenüber UV-Licht, erzielt. Somit wird das Auftreten unerwünschter Verfärbungen an der Oberfläche des erfindungsgemäßen Möbel- und/oder Innenausbauteils bzw. eines daraus hergestellten Möbels oder einer Innenausstattung zuverlässig verhindert. Darüber hinaus weisen derartige Molybdate eine besonders geringe Wasserlöslichkeit auf und sind zumindest im Wesentlichen farblos bzw. weiß. Hierdurch eignet sich das erfindungsgemäße Möbel- und/oder Innenausbauteil besonders gut für den Möbel- und Innenraumausbau, beispielsweise in Krankenhäusern, Pflegeheimen und dergleichen, da keine zusätzlichen Farbstoffe bzw. Farbpigmente zur Bereitstellung einer neutralen, weißen Oberfläche benötigt werden. Umgekehrt kann aufgrund der neutral-weißen Farbe der Oberfläche aber auch eine einfache Einfärbung durch Zusatz entsprechender Farbstoffe bzw. Farbpigmente vorgenommen werden. Weiterhin können die Löslichkeit, die Farbe und die antimikrobielle Wirksamkeit des Möbel- und/oder Innenausbauteils optimal an den jeweiligen Einsatzzweck angepasst werden. Mit Hilfe der genannten Verbindungen, einzeln und in beliebiger Kombination, kann zudem die Adhäsion von Mikroorganismen an der Oberfläche des Möbel- und/oder Innenausbauteils zusätzlich erschwert werden. Dies verhindert besonders effektiv die Besiedelung der Oberfläche des Möbel- und/oder Innenausbauteils.

Indem der Massegehalt der wenigstens einen Molybdän-haltigen Verbindungen bezogen auf die Festharzmasse des Harzes zwischen 0,10 % und 10 % beträgt, kann der jeweilige Stoffeinsatz an Molybdän-haltige(n) Verbindung(en) optimal an den späteren Einsatzzweck bzw. die geforderte antimikrobielle Wirksamkeit des erfindungsgemäßen Möbel- und/oder Innenausbauteils angepasst werden.

Zudem besitzt das Möbel- und/oder Innenausbauteil eine besonders lang anhaltende und breite antimikrobielle Wirksamkeit, die nicht von der Anwesenheit von Licht abhängig ist. Weitere sich ergebende Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung ist vorgesehen, dass das Möbel- und/oder Innenausbauteil durch ein Verfahren gemäß dem ersten Erfindungsaspekt erhältlich und/oder erhalten ist.

In einer weiteren vorteilhaften Ausgestaltung der Erfindung ist das Möbel- und/oder Innenausbauteil als Laminat, Imprägnat, Schichtverbundwerkstoff, Vorimprägnat, Rohspanplatte, Dünnspanplatte, MDF-Platte, MDF-Lackplatte, Grobspanplatte (OSB-Platte), Melaminharz-beschichtete Platte, HDF-Platte, Möbelfertigteil, Leichtbauplatte, Arbeitsplatte, Schichtstoff, insbesondere HPL-Schichtstoff und/oder CPL-Schichtstoff, Schichtstoffverbundplatte, Frontelement, Kompaktplatte, Fensterbank, Akustikplatte, Kante, insbesondere Dünnspan-Stützkante, Melaminkante, ABS-Kante, PVC-Kante und/oder PP-Kante, Nut- und/oder Federplatte, Rohspanplatte, Holzweichfaserplatte, Holzfaserplatte, Dünnspanplatte, Verlegeplatte, direktbeschichtete Laminatfußbodenplatte, Direktdruck-Laminatfußbodenplatte, Sockelleiste, Diele, Gegenzug, Kernpapier, Kernkarton, Overlaypapier, Dekorpapier, Dekorkarton, Dekorpappe, Folie, Vliesmaterial und/oder als ein Verbund von zwei oder mehr der genannten Werkstoffe ausgebildet. Hierdurch können mit Hilfe des erfindungsgemäßen Möbel- und/oder Innenausbauteil alle gängigen Möbel- und/oder Innenausbaumaßnahmen durchgeführt werden, so dass vollständig antimikrobiell ausgestattet Innenräume bereitgestellt werden können.

Weitere Vorteile ergeben sich, wenn das Möbel- und/oder Innenausbauteil mit einer Trägerplatte aus einem Holzwerkstoff, insbesondere einer Span-, Faser- und/oder OSB-Platte, verbunden, insbesondere verpresst ist und/oder wenigstens eine Lackschicht aufweist. Hierdurch können die mechanische und/oder chemische Widerstandsfähigkeit des Möbel- und/oder Innenausbauteils optimal an seinen jeweiligen Einsatzzweck angepasst werden.

Ein dritter Aspekt der Erfindung betrifft die Verwendung eines mittels eines Verfahrens gemäß dem ersten Erfindungsaspekt erhältlichen und/oder erhaltenen Möbel- und/oder Innenausbauteils und/oder wenigstens eines Möbel- und/oder Innenausbauteils gemäß dem zweiten Erfindungsaspekt zur Herstellung eines Möbels und/oder einer Innenausstattung. Hierdurch besitzt das resultierende Möbel und/oder die resultierende Innenausstattung eine besonders lang anhaltende und breite antimikrobielle Wirksamkeit, die nicht von der Anwesenheit von Licht abhängig ist. Das Möbel bzw. die Innenausstattung kann grundsätzlich mehrere gleich oder unterschiedlich ausgebildete erfindungsgemäße Möbel- und/oder Innenausbauteile umfassen. Alternativ kann das Möbel bzw. die Innenausstattung ausschließlich aus einem erfindungsgemäßen Möbel- und/oder Innenausbauteil bestehen. Weitere sich ergebende Merkmale und deren Vorteile sind den Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine Prinzipdarstellung eines ersten Abschnitts einer Anlage zur Herstellung eines erfindungsgemäßen, als Dekor- und/oder Overlaypapier ausgebildeten Möbel- und/oder Innenausbauteils;
- Fig. 2: eine Prinzipdarstellung eines zweiten Abschnitts der Anlage zur Herstellung des erfindungsgemäßen Möbel- und/oder Innenausbauteils; und
- Fig. 3: eine Perspektivansicht eines als Kante ausgebildeten Möbel- und/oder Innenausbauteils.

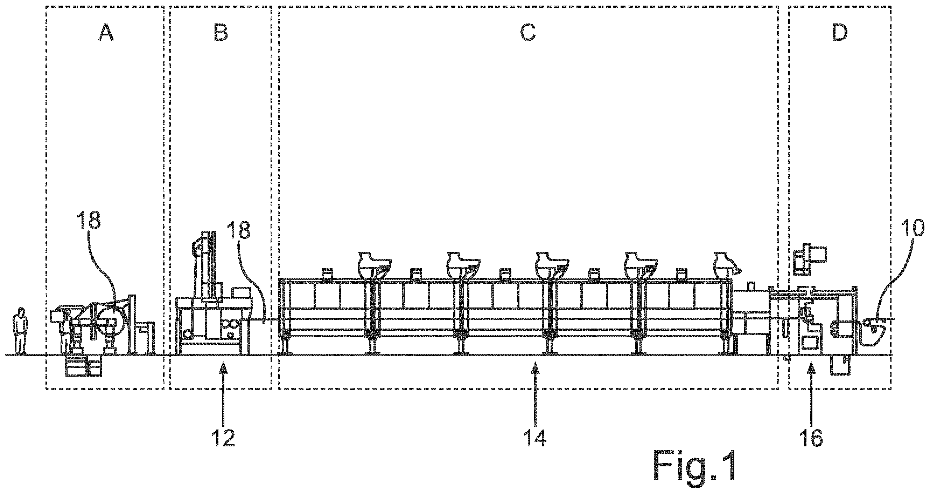

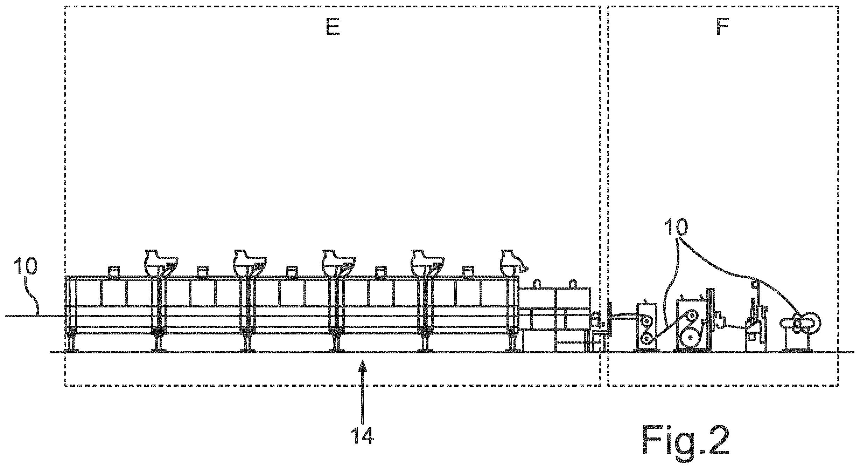

Fig. 1 zeigt eine Prinzipdarstellung eines ersten Abschnitts einer Anlage zur Herstellung eines erfindungsgemäßen Möbel- und/oder Innenausbauteils 10 und wird im Folgenden in Zusammenschau mit Fig. 2 erläutert werden, welche eine Prinzipdarstellung eines an den ersten Abschnitt anschließenden zweiten Abschnitts der Anlage zeigt. Als Möbel- und/oder Innenausbauteil 10 wird im gezeigten Ausführungsbeispiel ein antimikrobiell ausgestattetes Dekorpapier bzw. Overlaypapier hergestellt. In einem ersten Anlagenabschnitt A werden hierzu zunächst entsprechende Papier-Substrate 18 in Form von an sich bekannten Rollen angeliefert und abgewickelt. Die Grammaturen der Papier-Substrate 18 werden beim als Dekorpapier ausgebildeten Möbel- und/oder Innenausbauteil 10 zwischen etwa 70 g/m² und etwa 120 g/m² gewählt, während sie bei als Overlaypapier auszubildenden Möbel- und/oder Innenausbauteil 10 zwischen etwa 15 g/m² und etwa 35 g/m² gewählt werden. Jedoch können grundsätzlich auch abweichende Grammaturen verwendet werden.

In einem zweiten Anlagenabschnitt B werden die abgewickelten, band- bzw. flächenförmigen Papier-Substrate 18 durch eine Wanne 12 transportiert, welche mit einem Harz gefüllt ist, um die Substrate 18 mit dem Harz zu imprägnieren. Die im Schritt B auf das Substrat 18 aufgebrachten bzw. vom Substrat 18 aufgenommenen Harzmengen, jeweils bezogen auf das Trockengewicht des unbehandelten Papiers (lufttrocken), betragen beim Dekorpapier etwa 100 % bis 180 %, während sie beim Overlaypapier etwa 350 % bis 550 % betragen. Diese Angaben basieren auf den jeweiligen Massen nach dem Trocknen, wobei hier in der Regel noch eine Restfeuchtigkeit zwischen etwa 5 % und 9 % vorliegt.

Im dritten Anlagenabschnitt C erfolgt eine erste Trocknung des imprägnierten Substrats 18 bei Temperaturen zwischen 100 °C und 220 °C und einer durchschnittlichen Vorschubgeschwindigkeit zwischen etwa 30 m/min und etwa 90 m/min. Es werden so genannte Schwebetrockner 14 eingesetzt, mittels welchen ein berührungsfreies Trocknen der Materialbahn bzw. des imprägnierten Substrats 18 möglich ist. Die Trocknungstemperatur wird dabei im vorliegenden Ausführungsbeispiel so gewählt, dass zumindest im Wesentlichen keine Polymerisationsreaktionen im Harz ablaufen, da ansonsten ein späteres Verpressen bzw. Verkleben mit einem Trägerwerkstoff nicht oder nur unter Vermittlung einer zusätzlichen Klebeschicht möglich wäre.

Im vierten Anlagenabschnitt D werden bei Dekor- und Overlaypapier-Substraten 18 gleichermaßen zwischen etwa 15 g/m² und etwa 20 g/m² Harz mit Hilfe eines Rasterwerks 16 aufgetragen. Dabei kann grundsätzlich das gleiche oder ein unterschiedliches Harz bzw. Harzgemisch wie im Anlagenabschnitt B verwendet werden. Die in der Wanne 12 und am Rasterwerk 16 eingesetzten Harze haben jeweils einen Festharzgehalt zwischen etwa 50 % und etwa 60 %. Der Massegehalt der wenigstens einen Molybdän-haltigen Verbindungen wird bezogen auf die Festharzmasse des Harzes zwischen 0,10 % und 10 % gewählt, wobei sich Massengehalte von etwa 1,8 % bis etwa 3,5 % in der Regel als besonders vorteilhaft gezeigt haben.

In Abhängigkeit der Ausgestaltung des erfindungsgemäßen Möbel- und/oder Innenausbauteils 10 kann grundsätzlich auch vorgesehen sein, dass der Massegehalt der wenigstens einen Molybdän-haltigen Verbindungen bezogen auf die Gesamtmasse des Möbel- und/oder Innenausbauteils 10 zwischen 0,1 % und 10 %, insbesondere zwischen 0,15 % und 5 % und vorzugsweise zwischen 0,2 % und 3 % beträgt.

Im vorliegenden Ausführungsbeispiel erfolgt im vierten Anlagenabschnitt D auch die Zugabe wenigstens einer Molybdän-haltigen Verbindung, um das imprägnierte Substrat 18 mit einer antimikrobiell wirksamen Oberfläche zu beschichten und das vorliegend als Halbzeug ausgebildete Möbel- und/oder Innenausbauteil 10 herzustellen. Die Zugabe der wenigstens einen Molybdän-haltigen Verbindung bzw. die Beschichtung mit der wenigstens einen Molybdän-haltigen Verbindung kann dabei grundsätzlich ein- oder beidseitig erfolgen. Eine einseitige Zugabe erfolgt bevorzugt an der späteren Oberseite des Möbel- und/oder Innenausbauteils 10. Die wenigstens eine Molybdän-haltige Verbindung kann dabei grundsätzlich bereits in das Harz eingemischt sein und/oder unabhängig vom Harz auf die Oberfläche des Substrats 18 aufgebracht werden. Alternativ oder zusätzlich kann vorgesehen sein, dass bereits in einem früheren Anlagenabschnitt, beispielsweise im Anlagenabschnitt B, und/oder in einem späteren Anlagenabschnitt wenigstens eine Molybdän-haltige Verbindung auf das Substrat 18 aufgebracht wird. Wenn die wenigstens eine Molybdän-haltige Verbindung bereits im Anlagenabschnitt B oder früher auf das Substrat 18 aufgebracht wurde, sind insbesondere die Anlagenabschnitt D und E als optional anzusehen.

Als Molybdän-haltige Verbindungen können beispielsweise CaMnO₄, ZnMoO₄, Bi-MoO₄ oder VMoO₄, einzeln und in beliebiger Mischung, verwendet werden. Als weitere Molybdän-haltige Verbindungen können beispielsweise MoO₃, Molybdänoxid-Hydrate, MoO₃₋₂-Verbindungen wie beispielsweise MoO_{2,35} bis MoO_{2,97}, Mischoxide der Summenformel MoₓW₁₋ₓO₃ mit 0<x<1, beispielsweise Mo_{0,5}W_{0,5}O₃, oder Mischoxide der Summenformel MoₓW₁₋ₓ(Cu/Bi/V/Zn)_{y}O_{z}, in welcher 0<x<1, 0≤y≤2 und 2,0≤z≤3,0 bedeuten, einzeln und in beliebiger Mischung, verwendet werden. Die wenigstens eine Molybdän-haltige Verbindung kann grundsätzlich undotiert oder dotiert sein. Beispielsweise haben sich Dotierungen von etwa 500 ppm Bi und/oder 500 ppm V in bestimmten Anwendungsfällen als vorteilhaft gezeigt, um die antimikrobielle Wirksamkeit zusätzlich zu verbessern. Korngrößen von 0,1 bis 150 µm, gemessen über Laserbeugung/Laserstreuung, haben sich dabei generell als antimikrobiell besonders wirksam gezeigt. Besonders vorteilhaft sind mittlere Korngrößen zwischen etwa 1 µm und etwa 5 µm, da diese einerseits eine hervorragende antimikrobielle Wirksamkeit besitzen, andererseits aber im Gegensatz zu Nanopartikeln als unproblematisch für höhere Organismen anzusehen sind. Im Unterschied zu Antibiotika und organischen Bioziden weisen die im Rahmen der vorliegenden Erfindung verwendeten anorganischen Molybdän-haltigen Verbindungen eine hohe thermische und chemische Stabilität auf, so dass auch Temperaturen weit über 200 °C vollkommen unproblematisch sind und weder zu einer Beeinträchtigung der antimikrobiellen Wirksamkeit noch zu Verfärbungen oder anderen optischen Beeinträchtigungen führen.

Falls das Möbel- und/oder Innenausbauteil 10 später in besonders trockenen Innenräumen verwendet werden soll, hat es sich als vorteilhaft gezeigt, zusätzlich zu der wenigstens einen Molybdän-haltigen Verbindung wenigstens ein Hydrophilierungs- und/oder Hygroskopierungsmittel auf das Substrat 18 aufzubringen bzw. in das Substrat 18 einzubringen, um zumindest im Bereich der Oberfläche des verbundstoffartigen Möbel- und/oder Innenausbauteils 10 einen Mindestfeuchtegehalt sicherzustellen. Dies stellt eine von der herkömmlichen Lehrmeinung vollkommen abweichende Maßnahme dar, da bislang davon ausgegangen wurde, dass Oberflächen möglichst hydrophob gestaltet werden müssen, um antimikrobiell wirksam zu sein. Vorzugsweise werden die Molybdän-haltige Verbindung und das Hydrophilierungs- und/oder Hygroskopierungsmittel daher gemeinsam appliziert, um eine räumliche Nähe sicherzustellen. Alternativ oder zusätzlich kann die Molybdän-haltige Verbindung mit dem Hydrophilierungs- und/oder Hygroskopierungsmittel beschichtet sein, wobei die Beschichtung mikroporös und/oder ionenleitend ausgebildet sein kann, um einen Wasser- bzw. Protonendurchtritt sicherzustellen. Zur eventuellen Regenerierung der antimikrobiellen Wirksamkeit ist es dann ausreichend, das Möbel- und/oder Innenausbauteil 10 zu befeuchten, beispielsweise feucht abzuwischen und/oder im betreffenden Innenraum eine Luftfeuchtigkeit über etwa 10 % einzustellen.

Der Massegehalt des Hydrophilierungs- und/oder Hygroskopierungsmittels kann bezogen auf die Festharzmasse des Harzes ebenfalls zwischen 0,1 % und 10 %, insbesondere zwischen 0,15 % und 5 % und vorzugsweise zwischen 0,2 % und 4 % betragen. Alternativ kann der Massegehalt des Hydrophilierungs- und/oder Hygroskopierungsmittels bezogen auf die Gesamtmasse des Möbel- und/oder Innenausbauteils 10 beispielsweise zwischen 0,01 % und 10 % betragen. Der Massegehalt sollte grundsätzlich derart gewählt werden, dass das fertige Möbel- und/oder Innenausbauteil 10 in Abhängigkeit seiner späteren Verwendung eine bestimmte Mindestrestfeuchtigkeit aufweist bzw. bereitstellen kann. Als Hydrophilierungs- und/oder Hygroskopierungsmittel können beispielsweise Kieselgel und Atmer (pflanzliche Glycerolester) mit jeweiligen Massegehalten von etwa 2 % verwendet werden, wodurch sich ein Gesamtmassegehalt von 4 % Hydrophilierungs- bzw. Hygroskopierungsmittel ergibt. Alternativ können beispielsweise auch nur 2 % Kieselgel oder 2 % Atmer verwendet werden. Ebenso können alternative Hydrophilierungs- bzw. Hygroskopierungsmittel sowie abweichende Massenanteile des Hydrophilierungs- bzw. Hygroskopierungsmittels verwendet werden.

Mit Hilfe des Hydrophilierungs- und/oder Hygroskopierungsmittels kann das fertige Möbel- und/oder Innenausbauteil 10 auch in besonders trockenen Umgebungen mit Luftfeuchtigkeitswerten unter 20 % zuverlässig verwendet werden. Zum Aktivieren bzw. Regenerieren der antimikrobiellen Wirksamkeit kann es insbesondere unter sehr trockenen Umweltbedingungen grundsätzlich vorgesehen sein, die antimikrobiell ausgestattete Oberfläche des Möbel- und/oder Innenausbauteils 10 in gewissen Zeitintervallen anzufeuchten, beispielsweise im Wochenrhythmus mit einem feuchten Tuch abzuwischen, um eine gewünschte Mindestrestfeuchtigkeit im Bereich der Oberfläche des Möbel- und/oder Innenausbauteils 10 sicherzustellen.

Ziel ist, dass das Möbel- und/oder Innenausbauteil 10 zumindest an seiner Oberfläche bzw. in den oberflächennahen Bereichen Feuchtigkeit aufnimmt bzw. bereitstellen kann. Beispielsweise sollte das Möbel- und/oder Innenausbauteil 10 in Umgebungen mit <10% relativer Luftfeuchtigkeit zwischen etwa 0,01 und 10 Gew.-% Feuchtigkeit aufnehmen. Besonders vorteilhaft sind 0,1 bis 3% Gleichgewichtsfeuchtigkeit zumindest im Bereich seiner Oberfläche, die sich in der Regel nach einigen Minuten bis Stunden einstellen.

Im an den Anlagenabschnitt D folgenden Anlagenabschnitt E (Fig. 2) erfolgt eine weitere Trocknung, die analog zu Schritt C bei etwa 100 - 220°C bzw. bei einer Vorschubgeschwindigkeit von 30 - 90 m/min in einem Schwebetrockner 14 vorgenommen werden kann. Auch hier wird die Temperatur bevorzugt auf einen Wert eingestellt, bei dem Polymerisationsreaktionen im Harz vollständig oder zumindest im Wesentlichen unterbleiben.

Im Anlagenabschnitt F wird das Möbel- und/oder Innenausbauteil 10 je nach Ausgestaltung und späterem Verwendungszweck aufgerollt, abgelängt und/oder gestapelt.

Das als Imprägnat bzw. Halbzeug ausgebildete Dekor- bzw. Overlaypapier 10 wird vornehmlich für die Beschichtung von Holzwerkstoffen, bevorzugt von Span- und Faserplatten eingesetzt, um ein Schichtverbundmaterial herzustellen, das dann als Fertigbauteil direkt zur Herstellung von Möbeln und/oder zum Innenausbau von Gebäuden verwendet werden kann. Das Dekor- bzw. Overlaypapier 10 kann zu diesem Zweck beispielsweise durch direktes Verpressen oder im Wege eines Schichtstoffes weiterverarbeitet werden. Die Direktbeschichtung kann beispielsweise im Kurztaktverfahren (KT-Presse, diskontinuierlich) oder mittels Doppelbandpressen (kontinuierlich) erfolgen. Bei Schichtstoffen wird das als Dekor- bzw. Overlaypapier 10 mit einem oder mehreren Kernpapieren, die ihrerseits mit einem Harz, beispielsweise einem Phenolharz imprägniert sind, verpresst. Dies erfolgt zum Beispiel mit Hilfe von isobaren Doppelbandpressen.

Es ist jedoch zu betonen, dass das erfindungsgemäße Möbel- und/oder Innenausbauteil 10 grundsätzlich nicht nur als Laminat bzw. Imprägnat, sondern auch als Schichtverbundwerkstoff, Teilchenverbund, Faserverbund, Vorimprägnat, Rohspanplatte, Dünnspanplatte, MDF-Platte, MDF-Lackplatte, Melaminharz-beschichtete Platte, HDF-Platte, Grobspanplatte (OSB-Platte), Möbelfertigteil, Leichtbauplatte, Arbeitsplatte, Schichtstoff, insbesondere HPL-Schichtstoff und/oder CPL-Schichtstoff, Schichtstoffverbundplatte, Frontelement, Kompaktplatte, Fensterbank, Akustikplatte, Kante, Nut- und/oder Federplatte, Rohspanplatte, Holzweichfaserplatte, Holzfaserplatte, Dünnspanplatte, Verlegeplatte, direktbeschichtete Laminatfußbodenplatte, Direktdruck-Laminatfußbodenplatte, Sockelleiste, Diele, Gegenzug, Kernpapier, Kernkarton, Dekorkarton, Dekorpappe, Folie, Vliesmaterial oder als beliebige Kombination der genannten Bauteile hergestellt bzw. mit derartigen Bauteilen verbunden werden kann.

Alternativ oder zusätzlich kann das Möbel- und/oder Innenausbauteil 10 bedruckt werden. Dazu wird das Substrat 18 bzw. das Möbel- und/oder Innenausbauteil 10 - beispielsweise nach eine Vorbehandlung, die Reinigung, Schliff und/oder Primerauftrag umfassen kann - mit einer Grundierung versehen, die den Grundfarbton herstellt. Alternativ kann bzw. können die jeweils verwendete(n) Molybdän-haltige(n) Verbindung(en) auch als Grundierung fungieren. Darauf wird dann mittels Tiefdruck oder Digitaldruck ein gewünschtes Dekor appliziert. Bevorzugt acrylatbasierte, UVhärtbare Versiegelungslacke bewirken dabei den erforderlichen Glanz und die notwendigen mechanischen Eigenschaften wie Abrieb- und Kratzbeständigkeit sowie chemische und thermische Resistenz. Um das Möbel- und/oder Innenausbauteil 10 antibakteriell auszurüsten, wird die wenigstens eine Molybdän-haltige Verbindung in die Lackschicht ein- bzw. auf die Lackschicht aufgebracht. Vorzugsweise wird ein Lack verwendet, welcher bereits die wenigstens eine Molybdän-haltige Verbindung enthält. Hierdurch können beliebig ausgestaltete Möbel- und/oder Innenausbauteile 10 durch einfaches Lackieren auch nachträglich noch antimikrobiell ausgestattet werden.

Wie bereits erwähnt, weisen insbesondere Molybdate wie CaMoO₄, ZnMoO₄, Bi-MoO₄, VMoO₄, CuMoO₄ und dergleichen neben einer guten antimikrobiellen Wirkung auch eine besonders hohe Licht- und UV-Stabilität auf. Die Prüfung der UV-Beständigkeit des Möbel- und/oder Innenausbauteils 10 kann in Anlehnung an DIN EN 438-2, Abschnitt 27 durchgeführt werden. Hierbei wird eine Probe des erfindungsgemäßen Möbel- und/oder Innenausbauteils 10 für 60 Minuten einer Bestrahlung ausgesetzt. Gleiches erfolgt mit einer analog, aber ohne Zusatz von Molybdän-Verbindungen hergestellten Vergleichsprobe ("Standard-Produkt"). Die Auswertung erfolgt dann anhand eines visuellen Vergleichs der antimikrobiell ausgerüsteten und der nicht ausgerüsteten Probe und wird beispielsweise wie folgt bewertet:
1: kein wahrnehmbarer Unterschied zum Standard-Produkt
2: schwer wahrnehmbarer Unterschied zum Standard-Produkt
3: eindeutig wahrnehmbarer Unterschied zum Standard-Produkt
4: gerade noch akzeptabler Unterschied zum Standard-Produkt
5: nicht akzeptabler Unterschied zum Standard-Produkt

Für die genannten Molybdate werden dabei stets Werte von 1 oder höchstens 2 erhalten.

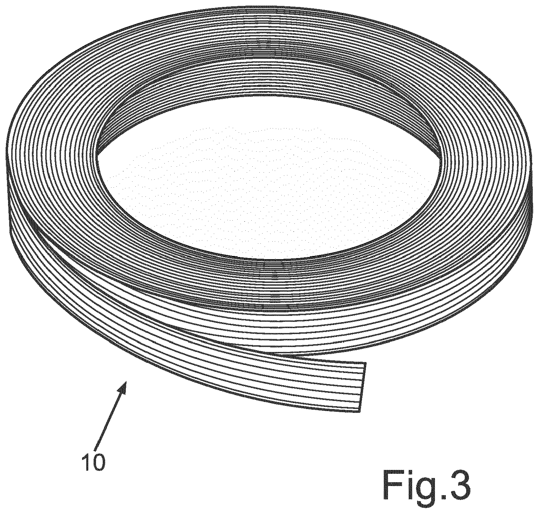

Fig. 3 zeigt eine Perspektivansicht eines weiteren Ausführungsbeispiels des erfindungsgemäßen Möbel- und/oder Innenausbauteils 10, welches vorliegend als bandförmige Kante ausgebildet ist, die zu einem Ring aufgerollt ist. In einer nicht erfindungsgemäßen Ausgestaltung weist das Möbel- und/oder Innenausbauteil 10 dabei lediglich einen vorzugsweise thermoplastischen Kunststoff wie Melamin, ABS, TPU, PVC, PP etc. auf, der zumindest oberflächlich die wenigstens eine Molybdän-haltige Verbindung umfasst. Hierzu kann die wenigstens eine Molybdän-haltige Verbindung in den Kunststoff eingearbeitet oder auf den Kunststoff aufgebracht werden. Die Kante 10 kann beispielsweise zur Schmalflächenbeschichtung sämtlicher Holzwerkstoffe verwendet werden, wobei sowohl die Dicken und Breiten als auch die optische Anmutung stückgenau an den jeweiligen Verwendungszweck anpassbar sind. In diesem Sinne kann somit auch diese Ausführungsform des erfindungsgemäßen Möbel- und/oder Innenausbauteils 10 als Kante als Halbzeug aufgefasst werden. Zur einfachen Weiterverarbeitung kann die Rückseite der Kante 10 beispielsweise angeschliffen sein oder eine zusätzliche Schmelzkleberschicht aufweisen.

Ebenso kann vorgesehen sein, dass die Kante bzw. das erfindungsgemäße Möbel- und/oder Innenausbauteil 10 als Schichtverbund ausgebildet ist und beispielsweise die Schichtabfolge Dekorpapier-Kernpapier-Gegenzug aufweist, wobei die einzelnen Schichten zunächst - beispielsweise wie vorstehend beschrieben - mit einem Harz, beispielsweise Melaminharz, beschichtet bzw. imprägniert und anschließend miteinander verpresst werden. Dabei kann es vorgesehen sein, dass die Kante bzw. das Möbel- und/oder Innenausbauteil 10 nur an seiner Vorderseite, das heißt in der Dekorpapier-Schicht, antimikrobiell mit der wenigstens einen Molybdän-Verbindung ausgestattet ist. Alternativ kann das zum Beschichten bzw. Imprägnieren verwendete Harz bereits die wenigstens eine Molybdän-Verbindung enthalten, wodurch der gesamte Schichtverbund bzw. auch die Rückseite der Kante 10 antimikrobiell ausgestattet werden kann.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zum Herstellen eines antimikrobiell wirksamen Möbel- und/oder Innenausbauteils (10),
**dadurch gekennzeichnet, dass**
zum Herstellen des Möbel- und/oder Innenausbauteils (10) ein Cellulose-haltiges Substrat (18) bereitgestellt, mit einem Harz und/oder einer harzähnlichen Substanz imprägniert und/oder vorimprägniert und/oder beschichtet wird und wenigstens eine Molybdän-haltige anorganische Verbindung zumindest im Bereich der Oberfläche des Substrats (18) angeordnet wird, wobei die wenigstens eine Molybdän-haltige anorganische Verbindung wenigstens ein Molybdat der Summenformel Mⁿ⁺_{z}MoO₄ umfasst, in welcher n*z=+2 beträgt und M ausgewählt wird aus einer Gruppe, die Mg, Ca, Ag, Cu, Bi, V, Ti und Zn umfasst, und wobei der Massegehalt der wenigstens einen Molybdän-haltigen Verbindungen bezogen auf die Festharzmasse des Harzes zwischen 0,10 % und 10 % beträgt.

2. Verfahren nach Anspruch 1,
**dadurch gekennzeichnet, dass**
eine weitere Molybdän-haltige anorganische Verbindung aus einer Gruppe ausgewählt wird, die MoO₂, MoO₃₋₂, MoO₃, Molybdänoxid-Hydrate, Molybdänhydroxide, Molybdänoxidhydroxide, Molybdänsesquioxide, Molybdänkarbid, Molybdännitrid, Molybdänsilizid, Molybdänsulfid, Cyanomolybdate, Molybdänhexacarbonyl, Molybdänacetylacetonat und Polyoxomolybdate umfasst.

3. Verfahren nach Anspruch 1 oder 2,
**dadurch gekennzeichnet, dass**
als weiteres Molybdat Ammoniumdimolybdat und/oder Ammoniumheptamolybdat und/oder wenigstens eine Verbindung der Summenformel Mⁿ⁺_{z}MoO₄ verwendet wird, in welcher n*z=+2 beträgt und M ausgewählt wird aus einer Gruppe, die Na und K umfasst.

4. Verfahren nach einem der Ansprüche 1 bis 3,
**dadurch gekennzeichnet, dass**
als weitere Molybdän-haltige anorganische Verbindung eine Molybdän- und Wolfram-haltige anorganische Mischverbindung verwendet wird und/oder dass zusätzlich zu der Molybdän-haltigen anorganischen Verbindung wenigstens eine Wolfram-haltige Verbindung verwendet wird.

5. Verfahren nach Anspruch 4,
**dadurch gekennzeichnet, dass**
die Molybdän- und Wolfram-haltige Mischverbindung mit einer Fluor-Verbindung, insbesondere mit einem Oxyfluorid, WOF₄, WO₂F₂, Calciumfluorid und/oder Fluorapatit, dotiert wird und/oder dass als Molybdän- und Wolfram-haltige anorganische Mischverbindung ein Mischoxid der Summenformel MoₓW₁₋ₓA_{y}O_{z} verwendet wird, in welcher 0<x<1, 0≤y≤2 und 2,0≤z≤3,0 betragen und A ein von Mo und W verschiedenes Metall-Ion und/oder NH₄⁺ bezeichnet, wobei A vorzugsweise ausgewählt wird aus einer Gruppe, die Na, K, Mg, Ca, Ag, Cu, Bi, V, Ti und Zn umfasst.

6. Verfahren nach einem der Ansprüche 1 bis 5,
**dadurch gekennzeichnet, dass**
die wenigstens eine Molybdän-haltige anorganische Verbindung in Form von Partikeln mit einer mittleren Korngröße zwischen 0,1 µm und 200 µm verwendet wird.

7. Verfahren nach einem der Ansprüche 1 bis 6,
**dadurch gekennzeichnet, dass**
zusätzlich zu der wenigstens einen Molybdän-haltigen anorganischen Verbindung wenigstens ein Hydrophilierungs- und/oder Hygroskopierungsmittel zumindest im Bereich der Oberfläche des Möbel- und/oder Innenausbauteils (10) angeordnet wird.

8. Verfahren nach einem der Ansprüche 1 bis 7,
**dadurch gekennzeichnet, dass**
das Cellulose-haltige Substrat (18) aus einer Gruppe ausgewählt wird, die Papier, insbesondere Dekorpapier und Overlaypapier, Karton, insbesondere Kernkarton, Pappe, Halbzellstoffe und Holzstoffe, insbesondere Spanplatten und Faserplatten, umfasst.

9. Verfahren nach einem der Ansprüche 1 bis 8,
**dadurch gekennzeichnet, dass**
das Substrat (18) zumindest bereichsweise mit einem Lack beschichtet wird, wobei der Lack die wenigstens eine Molybdän-haltige anorganische Verbindung enthält und/oder wobei die wenigstens eine Molybdän-haltige anorganische Verbindung in die Lackschicht eingearbeitet und/oder auf die Lackschicht aufgebracht wird.

10. Verfahren nach Anspruch 9,
**dadurch gekennzeichnet, dass**
als Lack ein UV-härtbarer Lack und/oder ein Acryllack und/oder ein Silikon-haltiger Lack und/oder ein Lack, welcher wenigstens ein thermoplastisches Elastomer enthält, und/oder ein Reaktivlack verwendet wird.

11. Verfahren nach Anspruch 9 oder 10,
**dadurch gekennzeichnet, dass**
der Massegehalt der wenigstens einen Molybdän-haltigen Verbindungen bezogen auf den Festharzgehalt des Lacks zwischen 0,10 % und 10 %, insbesondere zwischen 0,15 % und 5 % und vorzugsweise zwischen 0,2 % und 3 % beträgt.

12. Verfahren nach Anspruch 7 und einem der Ansprüche 9 bis 11,
**dadurch gekennzeichnet, dass**
ein Massengehalt des Hydrophilierungs- und/oder Hygroskopierungsmittels bezogen auf den Festharzgehalt des Lacks zwischen 0,1 % und 15 % beträgt.

13. Verfahren nach einem der Ansprüche 1 bis 12,
**dadurch gekennzeichnet, dass**
das Harz als Lösung, Suspension und/oder Dispersion mit einem Festharzgehalt zwischen 40 Gew.-% und 70 Gew.-%, insbesondere zwischen 50 Gew.-% und 60 Gew.-%, verwendet wird.

14. Verfahren nach einem der Ansprüche 1 bis 13,
**dadurch gekennzeichnet, dass**
das Harz ausgewählt wird aus einer Gruppe, die Phenol-Harze, Phenolformaldehyd-Harze, Melamin-Harze, Melaminformaldehyd-Harze, Harnstoff-Harze, Harnstoffformaldehyd-Harze und polymeres Diphenylmethandiisocyanat sowie beliebige Mischungen daraus umfasst.

15. Verfahren nach einem der Ansprüche 1 bis 14,
**dadurch gekennzeichnet, dass**
das Substrat (18) bezogen auf sein Trockengewicht mit 30 Gew.-% bis 600 Gew.-% Harz, insbesondere mit 100 Gew.-% bis 180 Gew.-% und/oder mit 350 Gew.-% bis 550 Gew.-%, imprägniert wird.

16. Verfahren nach einem der Ansprüche 1 bis 15,
**dadurch gekennzeichnet, dass**
das Substrat (18) mit einer Harzmenge zwischen 10 g/m² und 150 g/m², insbesondere zwischen 70 g/m² und 120 g/m² und/oder insbesondere zwischen 15 g/m² und 35 g/m² beschichtet wird.

17. Verfahren nach einem der Ansprüche 1 bis 16,
**dadurch gekennzeichnet, dass**
das Harz die wenigstens eine Molybdän-haltige anorganische Verbindung enthält und/oder dass die wenigstens eine Molybdän-haltige anorganische Verbindung in das Harz eingearbeitet und/oder auf das Harz aufgebracht wird.

18. Verfahren nach einem der Ansprüche 1 bis 17,
**dadurch gekennzeichnet**, dassder Massegehalt der wenigstens einen Molybdän-haltigen Verbindungen bezogen auf die Festharzmasse des Harzes zwischen 0,15 % und 5 % und vorzugsweise zwischen 0,2 % und 3 % beträgt.

19. Verfahren nach einem der Ansprüche 1 bis 18,
**dadurch gekennzeichnet, dass**
ein Massengehalt des Hydrophilierungs- und/oder Hygroskopierungsmittels bezogen auf die Festharzmasse des Harzes zwischen 0,1 % und 15 % beträgt.

20. Verfahren nach einem der Ansprüche 1 bis 19,
**dadurch gekennzeichnet, dass**
das imprägnierte und/oder beschichtete Substrat (18) mit wenigstens einem weiteren Werkstoff, insbesondere einem Holzwerkstoff und/oder einem Vorimprägnat, verpresst wird.

21. Verfahren nach einem der Ansprüche 1 bis 20,
**dadurch gekennzeichnet, dass**
das Möbel- und/oder Innenausbauteil (10) als Kante, insbesondere als Dünnspan-Stützkante oder Melaminkante ausgebildet wird, wobei die wenigstens eine Molybdän-haltige anorganische Verbindung zumindest im Bereich einer Oberfläche der Kante angeordnet wird.

22. Antimikrobiell wirksames Möbel- und/oder Innenausbauteil (10),
**dadurch gekennzeichnet, dass**
dieses ein Cellulose-haltiges Substrat (18) umfasst, das mit einem Harz und/oder einer harzähnlichen Substanz imprägniert und/oder vorimprägniert und/oder beschichtet ist, wobei wenigstens eine Molybdän-haltige anorganische Verbindung zumindest im Bereich der Oberfläche des Substrats (18) angeordnet ist, wobei die wenigstens eine Molybdän-haltige anorganische Verbindung wenigstens ein Molybdat der Summenformel Mⁿ⁺_{z}MoO₄ umfasst, in welcher n*z=+2 beträgt und M ausgewählt wird aus einer Gruppe, die Mg, Ca, Ag, Cu, Bi, V, Ti und Zn umfasst, und wobei der Massegehalt der wenigstens einen Molybdän-haltigen Verbindungen bezogen auf die Festharzmasse des Harzes zwischen 0,10 % und 10 % beträgt.

23. Möbel- und/oder Innenausbauteil (10) nach Anspruch 22,
**dadurch gekennzeichnet, dass**
dieses als Laminat, Imprägnat, Vorimprägnat, Schichtverbundwerkstoff, Rohspanplatte, Dünnspanplatte, MDF-Platte, MDF-Lackplatte, Grobspanplatte, Melaminharzbeschichtete Platte, HDF-Platte, Möbelfertigteil, Leichtbauplatte, Arbeitsplatte, Schichtstoff, insbesondere HPL-Schichtstoff und/oder CPL-Schichtstoff, Schichtstoffverbundplatte, Frontelement, Kompaktplatte, Fensterbank, Akustikplatte, Kante, insbesondere Dünnspan-Stützkante oder Melaminkante, Nut- und/oder Federplatte, Rohspanplatte, Holzweichfaserplatte, Holzfaserplatte, Dünnspanplatte, Verlegeplatte, direktbeschichtete Laminatfußbodenplatte, Direktdruck-Laminatfußbodenplatte, Sockelleiste, Diele, Gegenzug, Kernpapier, Kernkarton, Overlaypapier, Dekorpapier, Dekorkarton, Dekorpappe, Vliesmaterial und/oder als ein Verbund von zwei oder mehr der genannten Werkstoffe ausgebildet ist.

24. Möbel- und/oder Innenausbauteil (10) nach Anspruch 22 oder 23,
**dadurch gekennzeichnet, dass**
dieses mit einer Trägerplatte aus einem Holzwerkstoff, insbesondere einer Span-, Faser- und/oder OSB-Platte, verbunden, insbesondere verpresst ist und/oder wenigstens eine Lackschicht aufweist.

25. Verwendung eines mittels eines Verfahrens nach einem der Ansprüche 1 bis 21 erhältlichen und/oder erhaltenen Möbel- und/oder Innenausbauteils (10) und/oder wenigstens eines Möbel- und/oder Innenausbauteils (10) nach einem der Ansprüche 22 bis 24 zur Herstellung eines Möbels und/oder einer Innenausstattung.

## Claims

1. Method for producing an antimicrobial furniture part and/or interior fitting part (10),
**characterized in that**
in order to produce the furniture part and/or interior fitting part (10), a cellulose-containing substrate (18) is provided, impregnated and/or preimpregnated and/or coated with a resin or a resin-like substance, and/or at least one molybdenum-containing inorganic compound is arranged at least in the region of the surface of the substrate (18), wherein the at least one molybdenum-containing inorganic compound comprises at least one molybdate with the molecular formula Mⁿ⁺_{z}MoO₄, in which n*z=+2 and M is selected from a group comprising Mg, Ca, Ag, Cu, Bi, V, Ti and Zn, and wherein the mass content of the at least one molybdenum-containing compound in relation to the solid resin content of the resin is between 0.10% and 10%.

2. Method according to claim 1,
**characterized in that**
a further molybdenum-containing inorganic compound is selected from a group comprising MoO2,
MoO₃₋₂, MoO₃, molybdenum oxide hydrates, molybdenum oxihydroxides, molybdenum dihydroxides, molybdenum sesquioxides, molybdenum carbide, molybdenum nitride, molybdenum silicide, molybdenum sulphide, cyanomolybdate, molybdenum hexacarbonyl, molybdenum acetylacetonate and polyoxomolybdates.

3. Method according to claim 1 or 2,
**characterized in that**
as a further molybdate ammonium dimolybdate and/or ammonium heptamolybdate and/or at least one compound of molecular formula Mⁿ⁺_{z}MoO₄ is used, in which n*z=+2 and M is selected from a group comprising Na and K.

4. Method according to any one of claims 1 to 3,
**characterized in that**
as a further molybdenum-containing inorganic compound a molybdenum- and tungsten-containing inorganic mixed compound is used and/or that in addition to the molybdenum-containing inorganic compound at least one tungsten-containing compound is used.

5. Method according to claim 4,
**characterized in that**
the molybdenum- and tungsten-containing mixed compound is doped with a fluorine compound, particularly with an oxyfluoride, WOF₄, WO₂F₂, calcium fluoride and/or fluorine apatite, and/or that as a molybdenum- and tungsten-containing inorganic compound a mixed oxide of the molecular formula MoₓW₁₋ₓA_{y}O_{z} is used, in which 0<x<1, 0≤y≤2 and 2.0≤z≤3.0, and A denotes a metal ion other than Mo and W and/or NH4⁺, wherein A is preferably selected from a group comprising Na, K, Mg, Ca, Ag, Cu, Bi, V, Ti and Zn.

6. Method according to any one of claims 1 to 5,
**characterized in that**
the at least one molybdenum-containing inorganic compound is used in the form of particles with an average particle size of between 0.1 µm and 200 µm.

7. Method according to any one of claims 1 to 6,
**characterized in that**
in addition to the at least one molybdenum-containing inorganic compound, at least one hydrophilising and/or hygroscopicising agent is arranged at least in the region of the surface of the furniture part and/or interior fitting part (10).

8. Method according to any one of claims 1 to 7,
**characterized in that**
the cellulose-containing substrate (18) is selected from a group comprising paper, particularly decorative paper and overlay paper, cardboard, particularly core board, semi-pulps and wood materials, especially chipboard and fibreboard.

9. Method according to any one of claims 1 to 8,
**characterized in that**
the substrate (18) is coated at least in some regions with a lacquer containing at least one molybdenum-containing inorganic compound and/or wherein the at least one molybdenum-containing inorganic compound is incorporated into the lacquer layer and/or applied to the lacquer layer.

10. Method according to claim 9,
**characterized in that**
as the lacquer a UV-curable lacquer and/or an acrylic lacquer and/or a silicon-containing lacquer and/or a lacquer containing at least one thermoplastic elastomer, and/or a reactive lacquer, is used.

11. Method according to claim 9 or 10,
**characterized in that**
the mass content of the at least one molybdenum-containing compound in relation to the solid resin content of the resin is between 0.10% and 10%, particularly between 0.15% and 5% and preferably between 0.2% and 3%.

12. Method according to claim 7 and one of claims 9 to 11,
**characterized in that**
a mass content of the hydrophilising and/or hygroscopicising agent in relation to the solid resin content of the lacquer is between 0.1% and 15%.

13. Method according to any one of claims 1 to 12, **characterized in that** the resin is used as a solution, suspension and/or dispersion with a solid resin content of between 40 wt% and 70 wt%, particularly of between 50 wt% and 60 wt%.

14. Method according to any one of claims 1 to 13,
**characterized in that**
the resin is selected from the group comprising phenol resins, phenol formaldehyde resins, melamine resins, melamine formaldehyde resins, urea resins, urea formaldehyde resins and polymeric diphenylmethane diisocyanate and any desired mixtures thereof.

15. Method according to any one of claims 1 to 14,
**characterized in that**
the substrate (18) in relation to its dry weight is impregnated with between 30 wt% and 600 wt%, particularly with between 100 wt% and 180 wt% and/or with between 350 wt% and 550 wt% of resin.

16. Method according to any one of claims 1 to 15,
**characterized in that**
the substrate (18) is coated with a quantity of resin of between 10 g/m² and 150 g/m², particularly of between 70 g/m² and 120 g/m² and/or particularly of between 15 g/m² and 35 g/m².

17. Method according to any one of claims 1 to 16,
**characterized in that**
the resin contains the at least one molybdenum-containing inorganic compound and/or the at least one molybdenum-containing inorganic compound is incorporated into the resin and/or applied to the resin.

18. Method according to any one of claims 1 to 17,
**characterized in that**
the mass content of the at least one molybdenum-containing compound in relation to the solid resin content of the resin is between 0.15% and 5% and preferably between 0.2% and 3%.

19. Method according to any one of claims 1 to 18,
**characterized in that**
a mass content of the hydrophilising and/or hygroscopicising agent in relation to the solid resin content of the resin is between 0.1% and 15%.

20. Method according to any one of claims 1 to 19,
**characterized in that**
the impregnated and/or coated substrate (18) is pressed with at least one further material, particularly a wood material and/or a pre-impregnate.

21. Method according to any one of claims 1 to 20,
**characterized in that**
the furniture part and/or interior fitting part (10) is configured as an edge, particularly as a chipboard supporting edge or melamine edge, wherein the at least one molybdenum-containing inorganic compound is arranged at least in the region of a surface of the edge.

22. Antimicrobial furniture part and/or interior fitting part (10),
**characterized in that**
this comprises a cellulose-containing substrate (18) impregnated and/or preimpregnated and/or coated with a resin or a resin-like substance, wherein at least one molybdenum-containing inorganic compound is arranged at least in the region of a surface of the substrate (18), wherein the at least one molybdenum-containing inorganic compound comprises at least one molybdate with the molecular formula Mⁿ⁺_{z}MoO₄, in which n*z=+2 and M is selected from a group comprising Mg, Ca, Ag, Cu, Bi, V, Ti and Zn, and wherein the mass content of the at least one molybdenum-containing compound in relation to the solid resin content of the resin is between 0.10% and 10%.

23. Furniture part and/or interior fitting part (10) according to claim 22,
**characterized in that**
this is configured as a laminate, impregnate, pre-impregnate, laminate composite material, raw particle board, chipboard, MDF board, MDF coating plate, oriented strand board, melamine resin-coated board, HDF board, furniture precast, lightweight board, countertop, laminate especially HPL and/or CPL laminate, laminate composite panel, front element, compact panel, windowsill, acoustic panel, edge, especially chipboard supporting edge or melamine edge, tongue and/or groove board, raw chipboard, wood fibreboard, fibreboard, chipboard, flooring board, direct coat laminate flooring board, direct print laminate flooring board, skirting board, plank, return, core paper, core board, overlay paper, decorative paper, decorative cardboard, decorative card, non-woven material and/or as an association of two or more of said materials.

24. Furniture part and/or interior fitting part (10) according to claim 22 or 23,
**characterized in that**
this is connected, particularly pressed, with a support plate in a wooden material, particularly a chipboard, fibreboard and/or OSB board, and/or has at least one lacquer coat.

25. Use of a furniture part and/or interior fitting part (10) obtainable or obtained by means of a method according to any one of claims 1 to 21 and/or at least one furniture part and/or interior fitting part (10) according to any one of claims 22 to 24 for producing a piece of furniture and/or an interior fitting.

## Revendications

1. Procédé de fabrication d'un élément de meuble et / ou d'aménagement intérieur (10) à effet antimicrobien,
**caractérisé en ce que**, pour la fabrication de l'élément de meuble et / ou d'aménagement intérieur (10), un substrat (18) contenant de la cellulose (18) est mis à disposition, est imprégné et / ou pré imprégné et / ou revêtu avec une résine et / ou une substance similaire à la résine et au moins un composé inorganique, contenant du molybdène est disposé tout au moins dans la région de la face supérieure du substrat (18), sachant que l'au moins un composé inorganique contenant du molybdène comprend un molybdate de la formule brute Mⁿ⁺ _{z}MoO₄ dans laquelle n*z = +2 et M est choisi à partir d'un groupe comprenant Mg, Ca, Ag, Cu, Bi, V, Ti et Zn, et sachant que la teneur massique de l'au moins un composé inorganique contenant du molybdène est située entre 0,10 % et 10 % par rapport à la masse de résine solide de la résine.

2. Procédé selon la revendication 1,
**caractérisé en ce que** un autre composé inorganique contenant du molybdène est choisi à partir d'un groupe comprenant les MoO₂, MoO₃₋₂, MoO₃, hydrates d'oxyde de molybdène, hydroxydes de molybdène, hydroxydes d'oxyde de molybdène, sesquioxydes de molybdène, le carbure de molybdène, la nitrure de molybdène, les silicides de molybdène, le sulfure de molybdène, le molybdate de cyanure, l'hexacarbonyle de molybdène, l'acétonate acétylique de molybdène et les polyoxomolybdates.

3. Procédé selon revendication 1 ou 2,
**caractérisé en ce que,** comme autre molybdate, on utilise un dimolybdate d'ammonium et / ou un heptamolybdate d'ammonium et / ou au moins un composé de la formule brute Mⁿ⁺ _{z}MoO₄ dans laquelle n*z = + 2 et M est choisi à partir d'un groupe comprenant Na et K.

4. Procédé selon l'une des revendications 1 à 3
**caractérisé en ce que,** comme autre composé inorganique contenant du molybdène, on utilise un composé mixte inorganique contenant du molybdène et du tungstène et / ou que l'on utilise en plus du composé inorganique contenant du molybdène au moins un composé contenant du tungstène.

5. Procédé selon la revendication 4,
**caractérisé en ce que** le composé mixte inorganique contenant du molybdène et du tungstène est doté d'un composé du fluor, en particulier d'un oxyfluorure, WOF₄, WOF₂F₂, fluorure de calcium, et / ou d'un apatite de fluor, et / ou que l'on utilise, en tant que composé mixte inorganique contenant du molybdène et du tungstène, un oxyde mixte de la formule brute MOₓW₁₋ₓA_{y}O_{z} dans laquelle 0<x<1, 0≤y≤2 et 2,0≤z≤3,0 et où A désigne un ion métallique, qui diffère du Mo et du W, et / ou NH₄⁺, sachant que AX est choisi de préférence à partir d'un groupe qui comprend Na, K, Mg, Ca, Ag, Cu, Bi, V, Ti et Zn.

6. Procédé selon l'une des revendications 1 à 5,
**caractérisé en ce que** le composé inorganique contenant du molybdène est utilisé sous la forme de particules ayant une granulométrie située entre 0,1 µm et 200 µm.

7. Procédé selon l'une des revendications 1 à 6,
**caractérisé en ce que,** en plus de l'au moins un composé inorganique contenant du molybdène, au moins un agent d'hydrophilisation et / ou d'hydroscopie est disposé au moins dans la région de la face supérieure de l'élément de meuble et / ou d'aménagement intérieur (10) .

8. Procédé selon l'une des revendications 1 à 7,
**caractérisé en ce que** le substrat (18) contenant de la cellulose est choisi à partir du groupe qui comprend le papier, en particulier le papier décoratif et le papier overlay, le carton, en particulier le carton d'âme, le carton-pâte, les matériaux demi cellulaires et les matériaux à base de bois, en particulier les panneaux de particules et les panneaux de fibres.

9. Procédé selon l'une des revendications 1 à 8,
**caractérisé en ce que** substrat (18) est revêtu, au moins par sections, d'une laque, qui contient au moins un composé inorganique contenant du molybdène et / ou sachant que l'au moins un composé inorganique contenant du molybdène est incorporé dans la laque et / ou appliqué sur la laque.

10. Procédé selon la revendication 9,
**caractérisé en ce que,** comme laque, on utilise une laque durcissable aux UV et / ou une laque acrylique et / ou une laque contenant de la silicone et / ou une laque qui contient au moins un élastomère thermoplastique et / ou une laque réactive.

11. Procédé selon revendication 9 ou 10,
**caractérisé en ce que** la teneur massique de l'au moins un composé inorganique contenant du molybdène par rapport à la teneur en résine solide de la laque est située entre 0,10 % et 10 %, en particulier entre 0,15 % et 5 % et de préférence entre 0.2 % et 3 %.

12. Procédé selon la revendication 7 et l'une des revendications 9 à 11,
**caractérisé en ce que** la teneur massique de l'agent d'hydrophilisation et / ou d'hydroscopie par rapport à la teneur en résine solide de la laque est située entre 0,1 % et 15 %.

13. Procédé selon l'une des revendications 1 à 12,
**caractérisé en ce que** la résine est utilisée en forme de solution, de suspension et / ou de dispersion avec une teneur en résine solide située entre 40 % en poids et 70 % en poids, en particulier entre 50 % en poids et 60 % en poids.

14. Procédé selon l'une des revendications 1 à 13,
**caractérisé en ce que** la résine est choisie à partir du groupe qui comprend les résines phénoliques, résines phénol formaldéhyde, résines mélamine, résines mélamine formaldéhyde, résines urée formaldéhyde, le diisocyanate de diphénylméthane polymère, ainsi que tout mélange quelconque de ceux-ci.

15. Procédé selon l'une des revendications 1 à 14,
**caractérisé en ce que** le substrat (18), par rapport à son poids sec est imprégné avec 30 % à 600 % en poids de résine, en particulier avec 100 % en poids jusqu'à 180 % en poids et / ou avec 350 % en poids jusqu'à 550 % en poids.

16. Procédé selon l'une des revendications 1 à 15,
**caractérisé en ce que** le substrat (18) est revêtu d'une quantité de résine située entre 10 g / m² et 150 g / m², en particulier entre 70 g / m² et 120 g / m² et / ou en particulier entre 15 g / m² et 35 g / m².

17. Procédé selon l'une des revendications 1 à 16,
**caractérisé en ce que** la résine contient l'au moins un composé inorganique contenant du molybdène et / ou que l'au moins un composé inorganique contenant du molybdène est incorporé dans la résine et / ou appliqué sur la résine.

18. Procédé selon l'une des revendications 1 à 17,
**caractérisé en ce que** la teneur massique de l'au moins un composé inorganique contenant du molybdène par rapport à la teneur en résine solide de la résine est située entre 0,15 % et 5 % et de préférence entre 0,2 % et 3 %.

19. Procédé selon l'une des revendications 1 à 18,
**caractérisé en ce que** une teneur massique de l'agent d'hydrophilisation et / ou d'hydroscopie par rapport à la teneur en résine solide de la résine est située entre 0,1 % et 15 %.

20. Procédé selon l'une des revendications 1 à 19,
**caractérisé en ce que** le substrat (18) imprégné et / ou revêtu est pressé avec un au moins un autre matériau, en particulier avec un matériau à base de bois et / ou avec un préimprégné.

21. Procédé selon l'une des revendications 1 à 20,
**caractérisé en ce que** l'élément de meuble et / ou d'aménagement intérieur (10) est conçu en tant que bord, en particulier en tant que bord de support en particules fines et ou bord en mélamine, sachant que l'au moins un composé inorganique contenant du molybdène est disposé au moins dans la région d'une face supérieure du bord.

22. Elément de meuble et / ou d'aménagement intérieur (10) à effet antimicrobien,
**caractérisé en ce que** celui-ci comprend un substrat (18) contenant de la cellulose, qui est imprégné et / ou préimprégné et / ou revêtu avec une résine et / ou une substance similaire à la résine, sachant qu'au moins un composé inorganique, contenant du molybdène est disposé tout au moins dans la région de la face supérieure du substrat (18), sachant que l'au moins un composé inorganique contenant du molybdène comprend au moins un molybdate de la formule brute Mⁿ⁺ _{z}MoO₄ dans laquelle n*z = +2 et M est choisi à partir d'un groupe comprenant Mg, Ca, Ag, Cu, Bi, V, Ti et Zn, et sachant que la teneur massique de l'au moins un composé inorganique contenant du molybdène est située entre 0,10 % et 10 % par rapport à la masse de résine solide de la résine.

23. Elément de meuble et / ou d'aménagement intérieur (10) selon la revendication 22,
**caractérisé en ce que** celui-ci est réalisé sous la forme de laminé, d'imprégné, de préimprégné, de matériau composite stratifié, de panneau de particules brutes, de panneau de particules de faible épaisseur, de panneau MDF, de panneau de laque MDF, panneau de particules grossières, panneau revêtu de résine de mélamine, panneau HDF, élément de meuble préfabriqué, panneau de construction légère, panneau de travail, matériau stratifié, en particulier stratifié HPL et / ou stratifié CPL, panneau composite stratifié, d'élément frontal, de panneau compact, rebord de fenêtre, panneau acoustique, chant, en particulier chant en particules bord d'appui en particules de faible épaisseur ou chant en mélamine, panneau rainure et / ou languette, panneau en particules brutes, panneau de fibres de bois tendres, panneau de fibres de bois, panneau de particules de faible épaisseur, plaque prêtes à la pose, panneau de laminé pour revêtement de sol, directement revêtu, panneau de revêtement de sol directement imprimé, plinthe, élément de plancher, matériau de contre traction, papier d'âme, carton d'âme, papier overlay, papier décoratif, carton décoratif, papier-pate décoratif, matériau non tissé et / ou composite de deux ou de plusieurs des matériaux cités.

24. Elément de meuble et / ou d'aménagement intérieur (10) selon revendication 22 ou 23,
**caractérisé en ce que** celui-ci est relié à, en particulier pressé avec une plaque de support en matériau à base de bois, en particulier avec un panneau de particules, de fibres et / ou avec une plaque OSB, et / ou est doté d'au moins une couche de laque.

25. Utilisation d'un élément de meuble et / ou d'aménagement intérieur (10) qui peut être obtenu et / ou est obtenu au moyen d'un procédé selon l'une des revendications 1 à 21, et / ou d'au moins un élément de meuble et / ou d'aménagement intérieur (10) selon l'une des revendications 22 à 24 pour la fabrication d'un meuble ou d'un aménagement intérieur.
